# EUROPÄISCHE PATENTANMELDUNG

(11) **EP 4 019 157 A1**
(43) Veröffentlichungstag der Anmeldung: **29.06.2022**
(21) Anmeldenummer: 20217039.5
(22) Anmeldetag: 23.12.2020
(51) Int. Cl.: B21B 35/14, F16D 1/108

(54) **PRODUKTIONSANLAGE ZUR HERSTELLUNG VON WALZGUT UND VERFAHREN ZUR MONTAGE UND DEMONTAGE DER PRODUKTIONSANLAGE**

(71) Anmelder: Primetals Technologies Austria GmbH, 4031 Linz (AT)
(72) Erfinder: Gatterbauer, Roland, 4020 Linz (AT); Moser, Friedrich, 4202 Hellmonsoedt (AT); Souza, Marcelo, 4061 Pasching (AT)
(74) Vertreter: Metals@Linz

(57) **Zusammenfassung**

Die Erfindung betrifft eine Produktionsanlage (10) sowie ein Montageverfahren und ein Demontageverfahren für die Produktionsanlage (10) wobei die Produktionsanlage (10) eine drehbar um eine Drehachse (15) gelagerte Rotationskomponente (20), eine Zugstange (25), einen Verbinder (30) und eine Halteeinrichtung (115) aufweist, wobei der Verbinder (30) eine erste Anschlussseite (70), die mit einer Drehmomentübertragungseinrichtung (49) verbindbar ist, und eine zweite Anschlussseite (75) aufweist und der Verbinder (30) axial zwischen der Halteeinrichtung (115) und der ersten Längsseite (95) angeordnet ist, wobei die Zugstange (25) in axialer Richtung bezogen auf die Drehachse (15) zwischen einer ersten Position und zweiten Position bewegbar ist, wobei die Zugstange (25) an einer ersten Zugstangenlängsseite (105) mit der zweiten Anschlussseite (75) des Verbinders (30) mittels einer ersten Verbindung (106) in der ersten Position verbunden ist, wobei in der ersten Position der Verbinder (30) drehfest mit der Rotationskomponente (20) gekoppelt ist, wobei in der zweiten Position der Verbinder (30) an der Halteeinrichtung (115) angeordnet ist und diese den Verbinder (30) trägt, wobei in der zweiten Position der Zugstange (25) die erste Verbindung (106) reversibel lösbar ist, wobei die Zugstange (25) in einer Bewegung zwischen der ersten Position und der zweiten Position den Verbinder (30) in radialer Richtung stützt.

## Beschreibung

Die Erfindung betrifft eine Produktionsanlage gemäß Patentanspruch 1, ein Verfahren zur Montage der Produktionsanlage gemäß Patentanspruch 13 und ein Verfahren zur Demontage der Produktionsanlage gemäß Patentanspruch 14.

Aus WO 2010/139659 ist eine Walzstraße mit einer Mehrzahl von in einer Walzrichtung unmittelbar benachbarten Walzgerüsten, wobei die Walzgerüste jeweils zwei Arbeitswalzen aufweisen, zwischen denen das Walzgut bearbeitet wird. Ferner weist die Walzstraße mehrere seitlich neben den Walzgerüsten angeordnete Elektromotoren auf, wobei eine Welle des Elektromotors mittels einer Doppelgelenkwelle verbunden ist. Um die Arbeitswalze bei Verschleiß zu wechseln, ist die Doppelgelenkwelle mittels eines Krans halten, wenn die Doppelgelenkwelle von der Arbeitswalze getrennt ist.

Um die Gelenkwelle abzustützen ist aus EP 1 679 138 B1 eine Vorrichtung zum Ankuppeln eines Lagerzapfens an einen Antrieb bekannt. Die Vorrichtung weist einen Lagerblock in dem der Lagerzapfen drehbar gelagert ist; eine Gelenkwelle mit einem zapfenseitigen Gelenkkopf und einem antriebseitigen Gelenckopf; eine starre Kupplung die den zapfenseitigen Gelenkkopf axial fluchtend mit dem Lagerzapfen verbindet; und ein Auflager für den zapfenseitige Gelenkkopf bei gelöster Kupplung auf. Das Auflager derart am Lagerblock befestigt, und die Kupplung ist ausgelegt, dass bei geöffneter Kupplung, der zapfenseitige Gelenkkopf auf dem Auflager abgestützt wird.

Es ist Aufgabe der Erfindung, eine verbesserte Produktionsanlage, sowie ein verbessertes Verfahren zur Montage und/oder Demontage einer Rotationskomponente der Produktionsanlage bereitzustellen.

Diese Aufgabe wird mittels einer Produktionsanlage gemäß Patentanspruch 1, mittels eines Verfahrens zur Montage einer Rotationskomponente der Produktionsanlage gemäß Patentanspruch 13 und mittels eines Verfahrens zur Demontage einer Rotationskomponente der Produktionsanlage gemäß Patentanspruch 14 gelöst. Vorteilhafte Ausführungsformen sind in den abhängigen Ansprüchen angegeben.

Es wurde erkannt, dass eine verbesserte Produktionsanlage vorzugsweise zur Herstellung von Walzgut, insbesondere eine verbesserte Walzstraße, ein verbesserter Rollengang und/oder eine verbesserte Stranggießanlage dadurch bereitgestellt werden kann, dass die Produktionsanlage eine drehbar um eine Drehachse gelagerte Rotationskomponente, eine Zugstange, einen Verbinder und eine Halteeinrichtung aufweist. Die Zugstange erstreckt sich zwischen einer ersten Längsseite (antriebseitig gelegen) und einer zweiten Längsseite (bedienseitig gelegen) der ersten Rotationskomponente entlang der Drehachse durch die Rotationskomponente. Der Verbinder weist auf einer der ersten Längsseite axial abgewandten Seite eine erste Anschlussseite, die mit einer Drehmomentübertragungseinrichtung verbindbar ist, und auf einer axial der ersten Längsseite zugewandten Seite eine zweite Anschlussseite auf. Die Drehmomentübertragungseinrichtung kann eine Gelenkwelle, insbesondere eine Doppelgelenkwelle, eine Welle und/oder Kupplung sein. Der Verbinder kann axial zwischen der Halteeinrichtung oder der Gelenkwelle und der Rotationskomponente angeordnet sein. Die Zugstange ist in axialer Richtung bezogen auf die Drehachse zwischen einer ersten Position und einer axial versetzt zu der ersten Position angeordneten zweiten Position bewegbar. Die Zugstange ist an einer ersten Zugstangenlängsseite mit der zweiten Anschlussseite des Verbinders mittels einer ersten Verbindung in der ersten Position verbunden. In der ersten Position ist der Verbinder drehfest mit der Rotationskomponente gekoppelt. In der zweiten Position ist der Verbinder an der Halteeinrichtung angeordnet und die Halteeinrichtung ist ausgebildet, den Verbinder zu tragen. In der zweiten Position der Zugstange ist die erste Verbindung reversibel lösbar und eine Drehmomentverbindung zwischen Rotationskomponente und dem Verbinder ist unterbrochen. Die Zugstange ist ausgebildet, in der Bewegung zwischen der ersten Position und der zweiten Position den Verbinder in radialer Richtung zu stützen.

Diese Ausgestaltung hat den Vorteil, dass durch das Stützen des Verbinders in der Bewegung zwischen der ersten Position und der zweiten Position durch die Zugstange auf weitere Haltemittel zum Stützen des Verbinders und/oder der Gelenkwelle verzichtet werden kann. Ferner ist der Verbinder in der zweiten Position in die Halteeinrichtung eingehängt und sicher positioniert, sodass eine hohe Arbeitssicherheit für einen Monteur der Produktionsanlage erzielt wird.

In einer weiteren Ausführungsform weist die Produktionsanlage eine Ausrückeinrichtung auf, wobei die Ausrückeinrichtung an der zweiten Längsseite (bedienseitig gelegen) der Rotationskomponente angeordnet und mit der Rotationskomponente verbunden ist. Die Ausrückeinrichtung ist ausgebildet, die Zugstange zwischen der ersten Position und der zweiten Position zu verschieben. Von besonderem Vorteil ist, wenn die Ausrückeinrichtung ausgebildet ist, in der ersten Position der Zugstange eine in axialer Richtung bezogen auf die Drehachse wirkende Spannkraft an der Rotationskomponente abzustützen. Mittels der Ausrückeinrichtung kann von einer Bedienerseite der Produktionsanlage axial gegenüberliegend der Verbinder in der Halteeinrichtung platziert werden und der Verbinder von der Rotationskomponente entkoppelt werden. Dadurch kann die Rotationskomponente besonders schnell aus und wieder eingebaut werden, da der Monteur nicht unter beengten Bauraumverhältnissen, wie sie an der ersten Längsseite (antriebseitig gelegen) der Rotationskomponente vorherrschen arbeiten muss.

In einer weiteren Ausführungsform weist die Ausrückeinrichtung eine Spindelmutter auf. Die Spindelmutter ist drehbar um die Drehachse und relativ gegenüber der Rotationskomponente verdrehbar. Die Zugstange weist einen ersten Spindelabschnitt mit einem Außengewinde auf, wobei die Spindelmutter einen hohlkörperartigen zweiten Spindelabschnitt mit einem komplementär zu dem Außengewinde ausgebildeten Innengewinde aufweist. Das Innengewinde und das Außengewinde greifen kämmend ineinander ein, wobei die Spindelmutter ausgebildet ist, bei Rotation um die Drehachse die Zugstange zwischen der ersten Position und der zweiten Position in axialer Richtung zu bewegen. Die Spindelmutter kann durch den Monteur besonders einfach mittels eines Werkzeugs wie beispielsweise eines Handrads angetrieben werden, sodass die Zugstange besonders schnell zwischen der ersten Position und der zweiten Position verfahren werden kann. Zusätzlich kann mittels eines weiteren Werkzeugs ein Gegenmoment zu einem über das Werkzeug in die Spindelmutter eingebrachten Lösemoments oder Demontagemoments in die Zugstange eingeleitet werden und gegengehalten werden.

In einer weiteren Ausführungsform weist die Spindelmutter einen radial außen an dem zweiten Spindelabschnitt angeordneten und sich in radialer Richtung nach außen bezogen auf die Drehachse erstreckenden Lagersteg auf. Auf einer dem Verbinder zugewandten Axialseite des Lagerstegs weist an dem Lagersteg die Spindelmutter ein erstes Axiallager und auf einer dem Verbinder abgewandten Axialseite des Lagerstegs ein zweites Axiallager auf, wobei zwischen einer ersten Axiallagerfläche der Rotationskomponente und einer zweiten Axiallagerfläche der Ausrückreinrichtung ein Axialspalt angeordnet ist. Der Lagersteg und die Axiallager sind in dem Axialspalt angeordnet. Das erste Axiallager ist ausgebildet, bei Rotation der Spindelmutter in einer ersten Drehrichtung um die Drehachse an der zweiten Axiallagerfläche anzuliegen und eine erste Axialgegenkraft aus dem Lagersteg abzustützen. Das zweite Axiallager ist ausgebildet, bei Rotation der Spindelmutter um die Drehachse eine in eine zur erste Drehrichtung entgegengesetzten zweiten Richtung eine entgegengesetzt zu der ersten Axialgegenkraft wirkende zweite Axialgegenkraft an der zweiten Axiallagerfläche aus dem Lagersteg abzustützen. Dadurch wird ein mechanischer Verschleiß an dem Lagersteg verhindert. Ferner wird eine Leichtgängigkeit der Verdrehung der Spindelmutter in beide Drehrichtungen sichergestellt.

In einer weiteren Ausführungsform weist an der ersten Zugstangenlängsseite die Zugstange einen ersten Gewindeabschnitt mit einem ersten Gewinde auf, wobei in der ersten Position das erste Gewinde in die zweite Anschlussseite eingeschraubt ist. Das erste Gewinde weist in axialer Richtung bezogen auf die Drehachse eine maximale Gewindelänge auf, wobei die maximale Gewindelänge des ersten Gewindes geringer ist als ein maximaler Hub des Lagerstegs zwischen der ersten Axiallagerfläche und der zweiten Axiallagerfläche. Diese Ausgestaltung hat den Vorteil, dass eine Gewindesteigung des ersten Gewindes geringer ist als eine Gewindesteigung des Innengewindes der Spindelmutter gewählt werden kann, sodass mittels der Spindelmutter die Zugstange besonders schnell in axialer Richtung bewegt werden kann.

In einer weiteren Ausführungsform weist die Ausrückeinrichtung ein Mitnahmeelement und einen Anschlussflansch auf, wobei der Anschlussflansch an der zweiten Längsseite der Rotationskomponente drehfest befestigt ist und eine Mitnahmeelementaufnahme aufweist. Die Mitnahmeelementaufnahme ist auf einer dem Verbinder abgewandten Axialseite offen ausgebildet. Das Mitnahmeelement ist in einer ersten Ausrichtung und einer zur ersten Ausrichtung unterschiedlichen zweiten Ausrichtung in der Mitnahmeelementaufnahme anordenbar, wobei in der zweiten Ausrichtung das Mitnahmeelement um 180° um eine Rotationsachse geneigt zu der Drehachse verdreht in der Mitnahmeelementaufnahme angeordnet ist. In der ersten Ausrichtung ist das Mitnahmeelement formschlüssig mit dem Anschlussflansch verbunden. In der zweiten Ausrichtung ist das Mitnahmeelement gegenüber dem Anschlussflansch drehbar um die Drehachse verdrehbar. Sowohl in der ersten Ausrichtung als auch in der zweiten Ausrichtung ist das Mitnahmeelement formschlüssig drehfest mit der Spindelmutter verbunden. Dadurch kann in der ersten Ausrichtung eine Verdrehsicherung der Spindelmutter gegenüber der Rotationskomponente bereitgestellt werden. Ferner kann auf das Wendelement das Werkzeug zum Verdrehen der Spindelmutter besonders gut aufgesetzt werden.

In einer weiteren Ausführungsform weist das Mitnahmeelement einen ersten Eingriffsabschnitt, einen axial gegenüberliegend zu dem ersten Eingriffsabschnitt angeordneten zweiten Eingriffsabschnitt und einen axial zwischen dem ersten Eingriffsabschnitt und dem zweiten Eingriffsabschnitt angeordneten zweiten Absatz auf. In der ersten Ausrichtung ist der erste Eingriffsabschnitt auf den zweiten Spindelabschnitt aufgesteckt und der zweite Spindelabschnitt ist formschlüssig mit dem Mitnahmeelement verbunden ist. Die Zugstange durchgreift das Mitnahmeelement axial und ragt auf einer zum Verbinder abgewandten Seite über den zweiten Absatz des Mitnahmeelements mit wenigstens einem Befestigungsabschnitt in den zweiten Eingriffsabschnitt. Ein Befestigungsmittel ist in dem zweiten Eingriffsabschnitt am Befestigungsabschnitt befestigt. Das Befestigungsmittel ist ausgebildet, die Spannkraft der Zugstange an dem Mitnahmeelement abzustützen. In der zweiten Ausrichtung ist der zweite Eingriffsabschnitt auf den zweiten Spindelabschnitt aufgesteckt und der zweite Spindelabschnitt ist formschlüssig mit dem Mitnahmeelement verbunden und ein Antriebsdrehmoment zum Verdrehen der Spindelmutter in der zweiten Ausrichtung ist in das Mitnahmeelement einleitbar. Dadurch wird zum einen eine sichere Befestigung des Verbinders in der ersten Position sichergestellt, zum anderen kann dadurch das Mitnahmeelement kann das Mitnahmeelement in beiden Ausrichtungen mittels des ersten Eingriffsabschnitts und des zweiten Eingriffsabschnitts auf die Spindelmutter aufgesteckt werden und formschlüssig mit der Spindelmutter verbunden werden. Dadurch dient das Mitnahmeelement selbst als Verlängerung zwischen der Spindelmutter und dem Werkzeug.

In einer weiteren Ausführungsform weist die Zugstange auf einer in axialer Richtung bezogen auf die Drehachse gegenüberliegend zur ersten Zugstangenlängsseite angeordneten zweiten Zugstangenlängsseite einen Antriebsabschnitt auf. Der Antriebsabschnitt weist beispielsweise ein Außenvierkantprofil auf. Auf dem Antriebsabschnitt ein weiteres Werkzeug zur Einleitung eines Anzugsdrehmoments oder eines Lösemoments zum Lösen der ersten Verbindung einleitbar ist. Dadurch kann die erste Verbindung besonders einfach von der Bedienerseite der Produktionsanlage hergestellt oder gelöst werden.

In einer weiteren Ausführungsform weist die Rotationskomponente eine erste Buchse mit einer an einer inneren Umfangsseite angeordneten ersten Buchsenlagerfläche auf. Die Zugstange weist auf einer der ersten Längsseite zugewandten Seite einen ersten Lagerabschnitt mit einer umfangsseitig angeordneten ersten Lagerfläche auf. Sowohl in der ersten Position als auch in der zweiten Position durchgreift der erste Lagerabschnitt die erste Buchse axial und die erste Lagerfläche und die erste Buchsenlagerfläche liegen aneinander. Die erste Buchse ist ausgebildet, den ersten Lagerabschnitt in radialer Richtung zu lagern und Kräfte aus dem Verbinder und der Zugstange radial an der Rotationskomponente abzustützen.

In einer weiteren Ausführungsform weist die Zugstange einen Dehnabschnitt auf, wobei der Dehnabschnitt axial auf einer der Zugstangenseite abgewandten Seite des ersten Lagerabschnitts angeordnet ist. Der Dehnabschnitt ist in radialer Richtung schlanker als der erste Lagerabschnitt ausgebildet. Dadurch kann die Spannkraft durch den Dehnabschnitt, der sich unter der Spannkraft elastisch längt, zuverlässig über die Betriebsdauer der Rotationskomponente aufrechterhalten werden.

In einer weiteren Ausführungsform weist die Produktionsanlage eine Kupplung mit einer ersten Kupplungsseite und einer zweiten Kupplungsseite auf. Die erste Kupplungsseite ist an dem Verbinder angeordnet, wobei die zweite Kupplungsseite an der ersten Längsseite mit der ersten Rotationskomponente drehfest verbunden ist. In der ersten Position der Zugstange ist die Kupplung geschlossen und die Kupplung verbindet drehmomentschlüssig, vorzugsweise drehfest, den Verbinder mit der ersten Längsseite der Rotationskomponente, wobei in der zweiten Position der Zugstange die Kupplung geöffnet ist und Drehmomentübertragung zwischen Verbinder und der ersten Längsseite über die Kupplung unterbrochen ist.

Von besonderem Vorteil ist, wenn die Rotationskomponente ein Rotor einer elektrischen Maschine oder eine Rolle des Rollengangs oder eine Rolle der Walzstraße oder Stranggießanlage, insbesondere eine Treiberrolle, ist. Zusätzlich oder alternativ ist die Kupplung eine Klauenkupplung, wobei in der ersten Position die erste Kupplungsseite und die zweite Kupplungsseite kämmend ineinander eingreifen, wobei in der zweiten Position der Zugstange der Eingriff der ersten Kupplungsseite und der zweiten Kupplungsseite ineinander aufgehoben ist.

In einem Verfahren zur Montage der oben beschrieben Produktionsanlage werden die zweite Anschlussseite und die erste Zugstangenlängsseite fluchtend ausgerichtet. Der Verbinder ist an der Halteeinrichtung angeordnet und wird von der Halteeinrichtung getragen. Die Zugstange wird aus der ersten Position in die zweite Position bewegt. In der zweiten Position wird die erste Verbindung hergestellt. Die Zugstange wird von der zweiten Position in die erste Position verfahren und die Zugstange stützt den Verbinder in der Bewegung der Zugstange von der zweiten Position in die erste Position radial bezogen auf die Drehachse ab und trennt den Verbinder von der Halteeinrichtung.

Diese Ausgestaltung hat den Vorteil, dass auf einen Kran zum Stützen des Verbinders und der gegebenenfalls an dem Verbinder befestigten Gelenkwelle verzichtet werden kann, sodass die Produktionsanlage besonders schnell montiert und/oder die Rotationskomponente besonders schnell getauscht werden kann.

In einem Verfahren zur Demontage der oben beschrieben Produktionsanlage wird die Zugstange von der zweiten Position in die erste Position verfahren. Die Zugstange stützt den Verbinder in der Bewegung der Zugstange von der ersten Position in die zweite Position radial bezogen auf die Drehachse ab. In der Bewegung der Zugstange von der ersten Position in die zweite Position wird die Drehmomentübertragung zwischen Verbinder und erster Längsseite der Rotationskomponente getrennt und der Verbinder wird an die Halteeinrichtung bewegt. Die Halteeinrichtung trägt den Verbinder und in der zweiten Position wird die erste Verbindung zwischen Verbinder und Zugstange gelöst.

Diese Ausgestaltung hat den Vorteil, dass auch in der Demontage auf den Kran zum Stützen des Verbinders verzichtet werden kann. Dadurch muss der Monteur nicht auf der zur Bedienerseite gegenüberliegenden Seite unter beengten Bauraumbedingungen arbeiten. Dadurch ist die Demontage erleichtert.

Werden das Demontageverfahren und das Montageverfahren kombiniert, kann besonders einfach die Rotationskomponente, beispielsweise eine obere und/oder untere Rolle, insbesondere eine Treiberrolle, besonders schnell und einfach von der Bedienerseite her gewechselt werden.

Von besonderem Vorteil ist, wenn in der Bewegung der ersten Zugstange von der ersten Position in die zweite Position die Kupplung von einem geschlossenen Zustand in einen offenen Zustand überführt wird und die Drehmomentübertagung zwischen Verbinder und Rotationskomponente aufgehoben wird.

Nachfolgend wird die Erfindung anhand von FIGN näher erläutert. Dabei zeigen:
- FIG 1: eine schematische Darstellung einer Produktionsanlage in einem ersten Betriebszustand;
- FIG 2: eine schematische Darstellung der Produktionsanlage in einem zweiten Betriebszustand;
- FIG 3: eine schematische Darstellung der Produktionsanlage in einem dritten Betriebszustand;
- FIG 4: einen Ausschnitt einer konstruktiven Ausgestaltung der in den FIGN 1 bis 3 gezeigten Produktionsanlage in dem ersten Betriebszustand;
- FIG 5: eine Seitenansicht auf eine in FIG 4 gezeigte konstruktive Ausgestaltung einer Zugstange der Produktionsanlage;
- FIG 6: einen Halblängsschnitt durch einen in Figur 4 gezeigten Verbinder der in Figur 4 gezeigten Produktionsanlage;
- FIG 7: eine perspektivische Darstellung des in Figur 6 gezeigten Verbinders mit in Figur 6 gezeigten Blickrichtung A auf den in Figur 6 gezeigten Verbinder;
- FIG 8: eine perspektivische Darstellung mit der in Figur 6 gezeigten Blickrichtung B auf den in Figur 7 gezeigten Verbinder;
- FIG 9: einen in FIG 4 markierten Ausschnitt C durch den in FIG 4 gezeigten Halblängsschnitt durch die Produktionsanlage;
- FIG 10: eine Schnittansicht eines in FIG 4 markierten Ausschnitt D durch die in FIG 4 gezeigte Produktionsanlage 10 im ersten Betriebszustand;
- FIG 11: einen perspektivischen Halblängsschnitt durch eine Spindelmutter der in Figur 4 gezeigten Produktionsanlage;
- FIG 12: eine Draufsicht mit einer Blickrichtung E auf die in FIG 11 gezeigte Spindelmutter;
- FIG 13: einen perspektivischen Halblängsschnitt durch ein Mitnahmeelement der in Figur 4 gezeigten Produktionsanlage;
- FIG 14: eine erste Seitenansicht mit einer in FIG 13 gezeigten Blickrichtung F auf das in FIG 13 gezeigte Mitnahmeelement;
- FIG 15: eine Seitenansicht mit einer in FIG 13 gezeigten zweiten Blickrichtung G auf das in FIG 13 gezeigte Mitnahmeelement;
- FIG 16: einen Halblängsschnitt durch den Anschlussflansch;
- FIG 17: eine Seitenansicht mit einer in FIG 16 gezeigten Blickrichtung H auf den in FIG 16 gezeigten Anschlussflansch;
- FIG 18: eine perspektivische Darstellung einer Halteeinrichtung der in Figur 4 gezeigten Produktionsanlage;
- FIG 19: eine Seitenansicht auf die in FIG 18 gezeigte Halteeinrichtung;
- FIG 20: ein Ablaufdiagramm eines Verfahrens zur Demontage der in den FIGN 1 bis 18 gezeigten Produktionsanlage;
- FIG 21: den in FIG 4 markierten Ausschnitt D während eines zweiten Demontageschritts;
- FIG 22: den in FIG 4 markierten Ausschnitt D der Produktionsanlage während eines dritten Demontageschritts;
- FIG 23: den in FIG 4 gezeigten Ausschnitt D der Produktionsanlage während eines vierten Demontageschritts;
- FIG 24: einen Ausschnitt der Produktionsanlage während des vierten Demontageschritts;
- FIG 25: einen Ausschnitt eines Halblängsschnitts der Produktionsanlage kurz vor Erreichen der zweiten Position der Zugstange;
- FIG 26: einen Ausschnitt eines Halblängsschnitts durch die Produktionsanlage während eines sechsten Demontageschritts;
- FIG 27: den in FIG 4 markierten Ausschnitt C durch die Produktionsanlage während des siebten Demontageschritts; und
- FIG 28: einen Halblängsschnitt durch die Produktionsanlage nach einem siebten Demontageschritt.

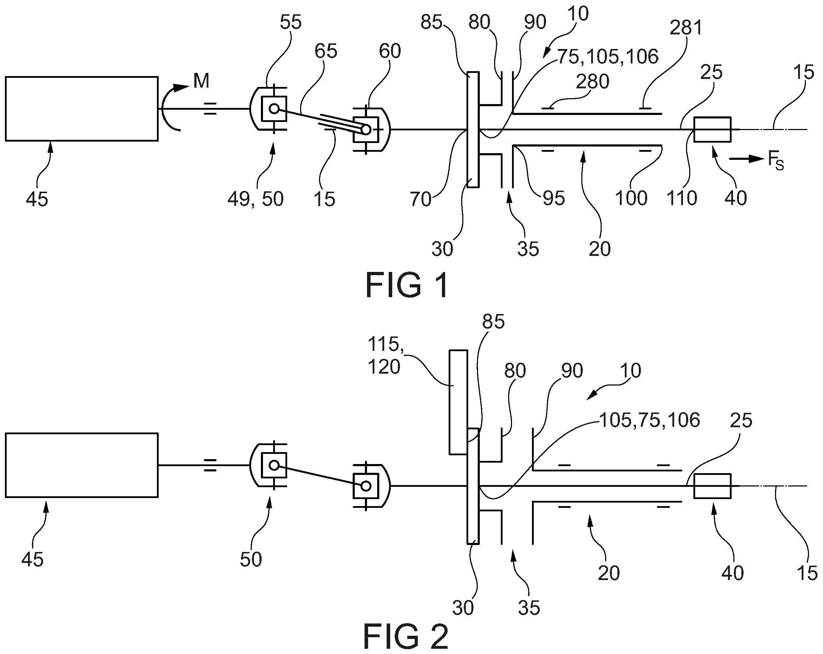

FIG 1 zeigt eine schematische Darstellung einer Produktionsanlage 10 in einem ersten Betriebszustand.

Die Produktionsanlage 10 kann beispielsweise als Rollenstrang, Walzstraße, insbesondere Warmwalzstraße und/oder Stranggießanlage ausgebildet sein. Die Produktionsanlage 10 dient dazu, ein Walzgut beispielsweise ein gewalztes Blech beispielsweise mit einer Dicke von 0,5 bis 5 mm herzustellen.

Die Produktionsanlage 10 weist eine um eine Drehachse 15 drehbar gelagerte erste Rotationskomponente 20, eine Zugstange 25, einen Verbinder 30, eine Kupplung 35, eine Ausrückeinrichtung 40, eine zweite Rotationskomponente 45 und Drehmomentübertragungseinrichtung auf. Die Drehmomentübertagungseinrichtung 49 ist in der Ausführungsform beispielhaft als Gelenkwelle 50 ausgebildet. Die Drehmomentübertagungseinrichtung 49 kann auch als Kupplung oder Welle ausgebildet sein.

Im Folgenden werden die Ausrichtung und geometrische Ausgestaltung der Produktionsanlage 10 mit Referenz auf die Drehachse 15 erläutert. Dabei entspricht eine axiale Richtung einer Richtung parallel oder entlang der Drehachse 15. Eine radiale Richtung ist eine Richtung senkrecht von der Drehachse weg oder senkrecht zu der Drehachse 15 hin. Unter einer Umfangsrichtung wird eine Richtung auf einer Kreisbahn in einer Drehebene senkrecht zu der Drehachse 15 um die Drehachse 15 verstanden. Unter einer tangentialen Richtung zu der Drehachse 15 wird eine Richtung senkrecht zu der Kreisbahn um die Drehachse 15 verstanden. Sofern nicht anders angegeben, beziehen sich diese Richtungen jeweils auf die Drehachse 15.

In der Ausführungsform ist beispielsweise die erste Rotationskomponente 20 als Rolle, insbesondere als Treiberrolle der Walzstraße ausgebildet. Auch könnte die erste Rotationskomponente 20 eine Rolle des Rollengangs oder eine Rolle, insbesondere eine Treiberrolle der Stranggießanlage sein. Auch wäre es möglich, dass die erste Rotationskomponente 20 ein Antriebsmotor der Produktionsanlage 10, insbesondere ein Rotor einer elektrischen Maschine zum Antrieb der Produktionsanlage 10 ist. Auch eine andere Ausgestaltung der ersten Rotationskomponente 20 wäre möglich.

Die zweite Rotationskomponente 45 ist in der Ausführungsform beispielsweise ein Antriebsmotor. Der Antriebsmotor kann als elektrische Maschine ausgebildet sein. Auch könnte die zweite Rotationskomponente 45 eine hydraulische Pumpe oder ein hydraulischer Motor sein.

In der schematischen Darstellung in FIG 1 werden drehfeste Verbindungen mittels gerader Linien schematisch dargestellt. Die drehfeste Verbindung kann beispielsweise als Welle oder Flansch ausgebildet sein.

Die Gelenkwelle 50 ist beispielhaft als Doppelgelenkwelle ausgebildet weist einen ersten Gelenkwellenkopf 55, einen zweiten Gelenkwellenkopf 60 sowie eine zweigeteilte Verbindungswelle 65 auf. In der Ausführungsform ist beispielhaft die zweite Rotationskomponente 45 drehfest mit dem ersten Gelenkwellenkopf 55 verbunden. Der erste Gelenkwellenkopf 55 ist drehmomentschlüssig mit dem zweiten Gelenkwellenkopf 60 mittels der Verbindungswelle 60 verbunden. Die Verbindungswelle 65 kann beispielsweise so ausgebildet sein, dass sie ein- und ausziehbar ist, sodass ein axialer Abstand des zweiten Gelenkwellenkopfs 60 gegenüber dem ersten Gelenkwellenkopf 55 veränderbar ist. Auf einer dem ersten Gelenkwellenkopf 55 abgewandten Seite ist der zweite Gelenkwellenkopf 60 mit einer ersten Anschlussseite 70 des Verbinders 30 drehfest verbunden.

Der Verbinder 30 weist neben der ersten Anschlussseite 70 eine zweite Anschlussseite 75 auf. Die zweite Anschlussseite 75 ist axial gegenüberliegend zu der ersten Anschlussseite 70 und somit auf einer zu der Gelenkwelle 50 abgewandten Seite angeordnet. Die zweite Anschlussseite 75 ist auf einer der ersten Rotationskomponente 20 zugewandten Seite des Verbinders 30 angeordnet. Radial außenseitig ist der Verbinder 30 mit einer ersten Kupplungsseite 80 der Kupplung 35 drehfest verbunden. Radial außenseitig zu der ersten Anschlussseite 70 und/oder der zweiten Anschlussseite 75 und vorzugsweise auch radial außenseitig zu der Anbindung an die erste Kupplungsseite 80 weist der Verbinder 30 eine dritte Anschlussseite 85 auf. Die dritte Anschlussseite 85 kann axial auf der zur ersten Anschlussseite 70 zugewandten Seite und/oder auch an der zur zweiten Anschlussseite 75 zugewandten Seite des Verbinders 30 angeordnet sein. In dem in FIG 1 gezeigten ersten Betriebszustand unbedeckt und frei, sodass keine Anbindung der dritten Anschlussseite 85 an eine weitere Komponente der Produktionsanlage 10 im ersten Betriebszustand vorliegt.

Die Kupplung 35 weist neben der ersten Kupplungsseite 80, die wie oben erläutert mit dem Verbinder 30 drehfest verbunden ist, eine zweite Kupplungsseite 90 auf. Die erste Kupplungsseite 80 und die zweite Kupplungsseite 90 sind in dem ersten Betriebszustand der Produktionsanlage 10 drehmomentschlüssig, vorzugsweise drehfest miteinander verbunden, sodass die Kupplung 35 geschlossen ist. In der Ausführungsform ist beispielhaft die Kupplung 35 als Klauenkupplung ausgebildet. Im geschlossenen Zustand greifen dabei die Klauen der ersten Kupplungsseite 80 in Klauen der zweiten Kupplungsseite 90 ein, um eine Drehmomentübertragung zwischen der ersten Kupplungsseite 80 und der zweiten Kupplungsseite 90 zu gewährleisten.

Die erste Rotationskomponente 20 weist eine erste Längsseite 95 und eine zweite Längsseite 100 auf. Die erste Längsseite 95 ist auf einer dem Verbinder 30 und der zweiten Rotationskomponente 45 zugewandten Axialseite angeordnet. Die erste Längsseite 95 kann daher auch als Antriebsseite der ersten Rotationskomponente 20 bezeichnet werden.

Die zweite Längsseite 100 ist auf einer dem Verbinder 30 und der zweiten Rotationskomponente 45 abgewandten axialen Seite der ersten Rotationskomponente 20 angeordnet. Die zweite Längsseite 100 kann daher auch als Bedienerseite der ersten Rotationskomponente 20 bezeichnet werden, von welcher aus Wartungs- und/oder Reparaturarbeiten der Produktionsanlage 10 durchgeführt werden können.

An der ersten Längsseite 95 ist die zweite Kupplungsseite 90 drehfest mit der ersten Rotationskomponente 20 verbunden. Die erste Rotationskomponente 20 erstreckt sich in axialer Richtung zwischen der ersten Längsseite 95 und der zweiten Längsseite 100 entlang der Drehachse 15 und ist Lageranordnungen 280, 281 um die Drehachse 15 drehbar gelagert. Die Rotationskomponente 20 wird in axialer Richtung zwischen der ersten Längsseite 95 und der zweiten Längsseite 100 durch die Zugstange 25 durchgriffen. Dazu kann die erste Rotationskomponente 20 beispielsweise hohlwellenartig ausgebildet sein, wobei innenseitig durch die erste Rotationskomponente 20 die Zugstange 25 durchgeführt ist.

Auf der vom Verbinder 30 abgewandten zweiten Längsseite 100 der ersten Rotationskomponente 20 ist die Ausrückeinrichtung 40 angeordnet. Die Ausrückeinrichtung 40 kann mit der ersten Rotationskomponente 20 verbunden sein. Die Ausrückeinrichtung 40 ist ferner mit der Zugstange 25 verbunden. Die Ausrückeinrichtung 40 ist ausgebildet, die Zugstange 25 in axialer Richtung zwischen einer ersten Position, wie sie in FIG 1 dargestellt ist, und einer zweiten Position (vgl. FIG 2) in axialer Richtung zu bewegen. Dabei ist die Zugstange 25 in der Ausführungsform auf der Drehachse 15 verlaufend angeordnet und wird in der axialen Bewegung zwischen der ersten Position und der zweiten Position entlang der Drehachse 15 durch die Ausrückeinrichtung 40 verschoben.

In FIG 1 ist in der ersten Position und im ersten Betriebszustand der Produktionsanlage 10 die Zugstange 25 an einer ersten Zugstangenlängsseite 105 zumindest axialfest mit der zweiten Anschlussseite 75 des Verbinders 30 verbunden. Dabei wird unter axialfest verstanden, dass in axialer Richtung die Zugstange 25 und der Verbinder 30 fest und unverschiebbar miteinander verbunden sind. Gegebenenfalls kann jedoch die Zugstange 25 gegenüber der zweiten Anschlussseite 75 verdreht werden. Vorzugsweise sind die erste Zugstangenlängsseite 105 und die zweite Anschlussseite 75 sowohl drehfest als auch axialfest miteinander verbunden. Auf einer zur ersten Zugstangenlängsseite 105 in axialer Richtung gegenüberliegenden zweiten Zugstangenlängsseite 110 der Zugstange 25 ist die Zugstange 25 mit der Ausrückeinrichtung 40 verbunden. Die Ausrückeinrichtung 40 ist ausgebildet, die Zugstange 25 in der ersten Position im ersten Betriebszustand zu halten. Dabei kann die Ausrückeinrichtung 40 eine Spannkraft Fₛ bereitstellen, die auf die Zugstange 25 wirkt. Die Spannkraft Fₛ ist in Axialrichtung von der ersten Längsseite 95 zur zweiten Längsseite 100 der ersten Rotationskomponente 20 gerichtet. Mit der Spannkraft Fₛ zieht die Zugstange 25 den Verbinder 30 und über den Verbinder 30 die erste Kupplungsseite 80 an die zweite Kupplungsseite 90 und hält mittels der Spannkraft Fₛ die Kupplung 35 im geschlossenen Zustand.

Wie in FIG 1 dargestellt weist die zweite Rotationskomponente 45 einen radialen Versatz zu der Drehachse 15 auf. Auch kann die zweite Rotationskomponente 45 fluchtend zu der Drehachse 15 ausgerichtet sein. Aufgrund der Ausgestaltung der Produktionsanlage 10 insbesondere als Walzstraße ergibt sich jedoch auf Grund der möglichen Montagetoleranzen selbst bei einer gewollten fluchtenden Ausrichtung ein geringer radialer Versatz zwischen der Drehachse 15 und einer ersten Rotationsachse der zweiten Rotationskomponente 45.

In der Ausführungsform ist beispielhaft die zweite Rotationskomponente 45, wie oben erläutert, als Antriebsmotor ausgebildet, der ein Antriebsdrehmoment M bereitstellt. Das Antriebsdrehmoment M wird im Betrieb der Produktionsanlage 10 von der zweiten Rotationskomponente 45 an den ersten Gelenkwellenkopf 55 übertragen. Der erste Gelenkwellenkopf 55 überträgt über die Verbindungswelle 65 das Antriebsdrehmoment M an den zweiten Gelenkwellenkopf 60. Vom zweiten Gelenkwellenkopf 60 wird das Antriebsdrehmoment M in die erste Anschlussseite 70 eingeleitet. Der Verbinder 30 überträgt das Antriebsdrehmoment M an die erste Kupplungsseite 80. Durch den geschlossenen Zustand der Kupplung 35 ist eine Drehmomentübertragung zwischen der ersten Kupplungsseite 80 und der zweiten Kupplungsseite 90 gewährleistet, wobei über die zweite Kupplungsseite 90 das Antriebsdrehmoment M in die erste Rotationskomponente 20 an der ersten Längsseite 95 eingeleitet wird. Durch die beispielhafte Ausgestaltung der ersten Rotationskomponente 20 als Rolle, beispielsweise der Walzstraße, insbesondere eines Treibergerüstes der Walzstraße, wird mit dem Antriebsdrehmoment M beispielsweise ein Blech in Förderrichtung weitertransportiert.

Auch kann beispielsweise bei Ausgestaltung der ersten Rotationskomponente 20 als Rolle des Rollengangs mittels des Antriebsdrehmoments M beispielsweise eine Bramme, ein Knüppel oder ein Billet weitertransportiert werden. Auch kann das Antriebsdrehmoment M genutzt werden, um beispielsweise einen heißen Strang einer Stranggießanlage sowohl zu verformen beispielsweise im Rahmen einer Soft-Reduktion als auch weiterzutransportieren.

FIG 2 zeigt eine schematische Darstellung der Produktionsanlage 10 in einem zweiten Betriebszustand.

Im zweiten Betriebszustand befindet sich die Zugstange 25 in der zweiten Position. In der zweiten Position ist die Zugstange 25 gegenüber der ersten Position in Längsrichtung in Richtung des Verbinders 30 und der zweiten Rotationskomponente 45 verschoben. Im zweiten Betriebszustand ist die Kupplung 35 in einem geöffneten Zustand. Im geöffneten Zustand ist die erste Kupplungsseite 80 von der zweiten Kupplungsseite 90 bei Ausgestaltung der Kupplung 35 beispielhaft als Klauenkupplung räumlich beabstandet, und die Drehmomentübertragung des Antriebsdrehmoments M zwischen der ersten Kupplungsseite 80 und der zweiten Kupplungsseite 90 ist unterbrochen. In diesem Zustand ist die erste Rotationskomponente 20 gegenüber der zweiten Rotationskomponente 45 um die Drehachse 15 relativ verdrehbar. Zusätzlich ist in der zweiten axialen Position der Zugstange die dritte Anschlussseite 85 mit einer Halteeinrichtung 115 zumindest radialfest verbunden. Die Halteeinrichtung 115 kann beispielsweise einen Träger 120 aufweisen, der ortsfest angeordnet und mit einem Gerüst beispielsweise der Walzstraße verbunden ist. Durch die radialfeste Verbindung der dritten Anschlussseite 85 des Verbinders 30 mit der Halteeinrichtung 115 kann eine Masse des Verbinders 30 und der Gelenkwelle 50 zumindest teilweise über die Halteeinrichtung 115 abgestützt werden. Dadurch ist die Zugstange 25 in radialer Richtung in der zweiten Position entlastet.

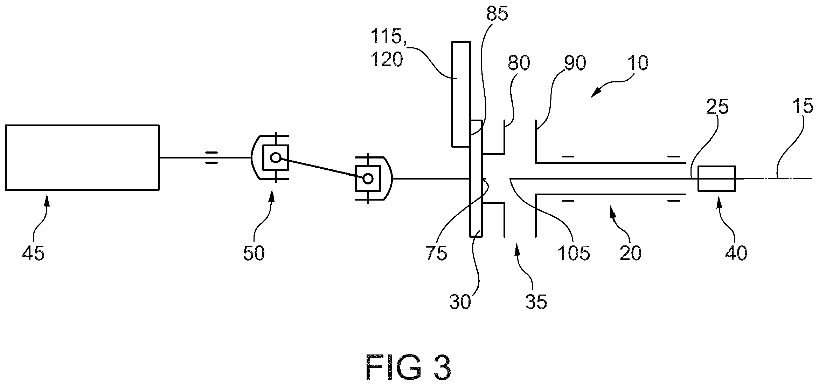

FIG 3 zeigt eine schematische Darstellung der Produktionsanlage 10 in einem dritten Betriebszustand.

Im dritten Betriebszustand ist die erste Verbindung 106 zwischen der ersten Zugstangenlängsseite 105 und der zweiten Anschlussseite 75 des Verbinders 30 gelöst. Ferner ist beispielhaft im dritten Betriebszustand die Zugstange 25 wieder in die erste Position gefahren. Dadurch ist die erste Zugstangenlängsseite 105 beabstandet zu der zweiten Anschlussseite 75 angeordnet. Im dritten Betriebszustand kann beispielsweise die Rotationskomponente 20 zusammen mit der Zugstange 25 und der Ausrückeinrichtung 40 entfernt werden und beispielsweise ausgetauscht werden. In ausgebautem Zustand kann besonders leicht die erste Rotationskomponente 20 und/oder die Ausrückeinrichtung 40 und/oder die Zugstange 25 revisioniert werden.

In einer Weiterbildung kann die Zugstange 25 verglichen mit der ersten Position noch weiter in die erste Rotationskomponente 25 verfahren und eingezogen sein. Dadurch ist die erste Zugstangenlängsseite 105 in der ersten Rotationskomponente 20 angeordnet.

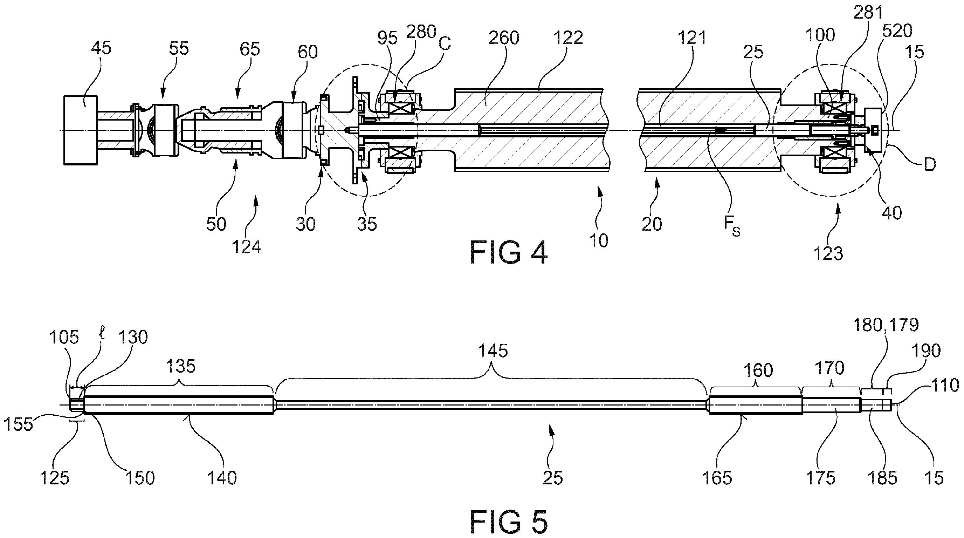

FIG 4 zeigt einen Ausschnitt einer konstruktiven Ausgestaltung der in FIGN 1 bis 3 gezeigten Produktionsanlage 10 in dem ersten Betriebszustand.

Die erste Rotationskomponente 20 ist in der in FIG 4 gezeigten konstruktiven Ausgestaltung beispielhaft als Treiberrolle der Walzstraße ausgebildet. Insbesondere kann hierbei die erste Rotationskomponente 20 die in Förderrichtung letzte Treiberrolle der Walzstraße sein, nach der das durch die Walzstraße laufende Blech auf einer Spindeleinrichtung aufgerollt wird. Dabei kann es sich um eine obere oder eine untere Treiberrolle handeln. Die Walzstraße weist dabei eine Bedienerseite 123 auf, die besonders gut zugänglich ist und von der aus Wartungsarbeiten durchgeführt werden. Die Bedienerseite 123 ist bezogen auf die Drehachse 15 axial zu einer Antriebsseite 124 angeordnet. An der Antriebsseite 124 sind beispielsweise die Gelenkwelle 50 und die zweite Rotationskomponente 45, die in der Ausführungsform als Antriebsmotor ausgebildet ist, angeordnet.

Die erste Rotationskomponente 20 weist eine Welle 260 mit einem Hohlbereich 121 auf. Die Welle 260 ist als Hohlwelle ausgebildet. Außenseitig kann an einer Mantelfläche der Welle 260 eine Schutzschicht 122, wobei außenseitig der Schutzschicht 122 eine Lauffläche der ersten Rotationskomponente 20 angeordnet ist.

Die Zugstange 25 erstreckt sich in axialer Richtung zwischen der ersten Längsseite 95 und der zweiten Längsseite 100 der ersten Rotationskomponente 20 und durchgreift in dem Hohlbereich 121 durchgreift. Die Lagerung der Welle 260 sowohl in axialer als auch radialer Richtung in der Produktionsanlage 10 erfolgt mittels einer ersten Lageranordnung 280 und einer zweiten Lageranordnung 281. Die erste Lageranordnung 280 ist axial auf der zur ersten Längsseite 95 zugewandten Seite der Welle 260 angeordnet und die zweiten Lageranordnung 281 ist auf einer der zweiten Längsseite 100 zugewandten Seite der ersten Rotationskomponente 20 angeordnet.

Die Ausrückeinrichtung 40 ist an der zweiten Längsseite 100 der ersten Rotationskomponente 20 befestigt und rotiert somit mit der Drehzahl der ersten Rotationskomponente 20. Abweichend gegenüber der in FIGN 1 bis 3 gezeigten Darstellung ist die Gelenkwelle 50 geradlinig auf der Drehachse 15 beispielhaft fluchtend ausgerichtet.

FIG 5 zeigt eine Seitenansicht auf eine in FIG 4 gezeigte konstruktive Ausgestaltung der Zugstange 25.

Die Zugstange 25 weist einen ersten Gewindeabschnitt 125 auf. Der erste Gewindeabschnitt 125 weist ein erstes Gewinde 130 mit einer ersten Gewindesteigung auf. Das erste Gewinde 130 kann als erstes Außengewinde ausgebildet sein. Das erste Gewinde 130 kann beispielsweise ein metrisches Gewinde oder ein Feingewinde sein. Das erste Gewinde 130 weist in axialer Richtung bezogen auf die Drehachse 15 eine maximale Gewindelänge 1 auf. Der erste Gewindeabschnitt 125 schließt sich an die erste Zugstangenlängsseite 105 an. Bezogen auf die Drehachse 15 ist die zweite Zugstangenlängsseite 110 axial gegenüberliegend zu der ersten Zugstangenlängsseite 105 angeordnet.

Auf einer der zweiten Zugstangenlängsseite 110 zugewandten Seite schließt sich an den ersten Gewindeabschnitt 125 in FIG 5 beispielhaft ein erster Lagerabschnitt 135 der Zugstange 25 an. Der erste Lagerabschnitt 135 weist umfangsseitig eine erste Lagerfläche 140 auf. Der erste Lagerabschnitt 135 ist beispielhaft zylinderförmig ausgebildet und erstreckt sich in seiner Haupterstreckungsrichtung entlang der Drehachse 15.

Axial zwischen dem ersten Gewindeabschnitt 125 und dem ersten Lagerabschnitt 135 weist die Zugstange 25 einen ersten Absatz 150 auf. Der erste Absatz 150 weist stirnseitig auf einer der ersten Zugstangenlängsseite 105 zugewandten Axialseite eine erste Absatzfläche 155 auf, die sich beispielhaft in einer Drehebene zu der Drehachse 15 erstreckt.

Auf einer zur zweiten Zugstangenlängsseite 110 zugewandten Seite, also auf einer dem ersten Gewindeabschnitt 125 abgewandten Seite schließt sich an den ersten Lagerabschnitt 135 ein Dehnabschnitt 145 der Zugstange 25 an. Der Dehnabschnitt 145 ist beispielhaft zylinderförmig entlang der Drehachse 15 erstreckend ausgebildet. Dabei weist der Dehnabschnitt 145 in radialer Richtung eine schlankere Ausgestaltung auf als der erste Lagerabschnitt 135. Beispielhaft ist in Axialrichtung der Dehnabschnitt 145 länger ausgebildet als der erste Lagerabschnitt 135.

Auf einer der zweiten Zugstangenlängsseite 110 zugewandten Seite schließt sich an den Dehnabschnitt 145 ein zweiter Lagerabschnitt 160 an. Der erste Lagerabschnitt 160 weist umfangsseitig eine zweite Lagerfläche 165 auf. Der zweite Lagerabschnitt 160 kann beispielsweise zylinderförmig ausgebildet sein. Dabei kann die Ausgestaltung in radialer Richtung identisch zum ersten Lagerabschnitt 135 ausgewählt sein. Beispielhaft ist in FIG 5 der zweite Lagerabschnitt 160 in axialer Richtung kürzer als der erste Lagerabschnitt 135.

Auf einer zur zweiten Zugstangenlängsseite 110 zugewandten Seite schließt sich an den zweiten Lagerabschnitt 160 ein erster Spindelabschnitt 170 an. Der erste Spindelabschnitt 170 weist ein zweites Gewinde 175 auf. Das zweite Gewinde 175 ist als zweites Außengewinde ausgebildet und weist eine zweite Gewindesteigung auf, die beispielhaft deutlich größer als die erste Gewindesteigung des ersten Gewindes 130 gewählt ist. Beispielsweise kann das zweite Gewinde 175 ein Trapezgewinde sein.

Auf einer der zweiten Zugstangenlängsseite 110 zugewandten Seite schließt sich direkt an den ersten Spindelabschnitt 170 ein Befestigungsabschnitt 179 der Zugstange 25 an. Der zweite Gewindeabschnitt 180 weist ein drittes Gewinde 185 auf. Das dritte Gewinde kann als drittes Außengewinde ausgebildet sein und kann beispielsweise ein metrisches Gewinde oder ein Feingewinde sein.

Zwischen der zweiten Zugstangenlängsseite 110 und dem zweiten Gewindeabschnitt 180 ist ein Antriebsabschnitt 190 angeordnet. Der Antriebsabschnitt 190 weist beispielsweise ein Kopfprofil auf. Das Kopfprofil kann beispielsweise ein Vierkantprofil oder ein Sechskantprofil oder ein Torxaußenprofil sein. Auch kann der Antriebsabschnitt 190 ein Innenprofil wie beispielsweise einen Innenvierkantprofil, einen Imbusprofil oder ein Innentorxprofil aufweisen.

In der Ausführungsform ist beispielhaft die Zugstange 25 mehrteilig ausgebildet. Dabei ist der Dehnabschnitt 145 auf einer der ersten Zugstangenlängsseite 105 zugewandten Seite in dem ersten Lagerabschnitt 135 und auf einer der zweiten Zugstangenlängsseite 110 zugewandten Seite in dem zweiten Lagerabschnitt 160 befestigt. Die Befestigung kann beispielsweise dadurch erfolgen, dass der Dehnabschnitt 145 in den Lagerabschnitt 135, 160 eingeschraubt und verstemmt ist. Dadurch wird eine zuverlässige Verbindung des Dehnabschnitts 145 mit den axial angrenzenden Lagerabschnitten 135, 160 sichergestellt. Ferner kann dadurch ein Werkstoff des Dehnabschnitts 145 andersartig zu einem Werkstoff des ersten Lagerabschnitts 135 und/oder eines Werkstoffs des zweiten Lagerabschnitts 160 gewählt werden. Insbesondere kann der Werkstoff des Dehnabschnitts 145 so gewählt sein, dass dieser besonders gut die Spannkraft Fₛ duldet und sich unter der Spannkraft Fₛ elastisch reversibel dehnen kann.

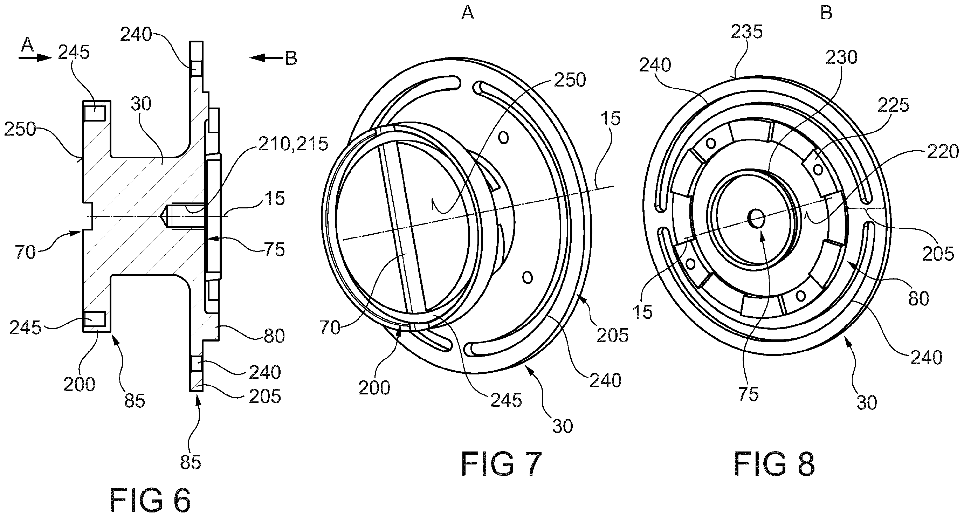

FIG 6 zeigt einen Halblängsschnitt durch den in FIG 4 gezeigten Verbinder 30 der in FIG 4 gezeigten Produktionsanlage 10.

Der Verbinder 30 ist im Wesentlichen als Rotationsbauteil ausgebildet. Der Verbinder 30 ist an einer ersten Stirnseite mittels der ersten Anschlussseite 70 mit der Gelenkwelle 50 verbunden. An einer in axialer Richtung gegenüberliegend zu der ersten Stirnseite 250 angeordneten zweiten Stirnseite 220 ist der Verbinder 30 mit der Kupplungsseite 80 verbunden. Die Kupplungsseite 80 ist dem ersten Längsende 95 der ersten Rotationskomponente 20 zugewandt.

Radial außenseitig zu der ersten Kupplungsseite 80 ist die dritte Anschlussseite 85 angeordnet. Dabei ist in FIG 6-beispielhaft die dritte Anschlussseite 85 zweiteilig ausgebildet. Die dritten Anschlussseite 85 weist einen ersten Befestigungsflansch 200 und einen zweiten Befestigungsflansch 205 auf, die in axialer Richtung bezogen auf die Drehachse 15 versetzt zueinander angeordnet sind. Dabei ist in radialer Richtung der zweite Befestigungsflansch 205 breiter ausgebildet als der erste Befestigungsflansch 200. Der erste Befestigungsflansch 200 ist auf einer der Gelenkwelle 50 zugewandten Seite, und somit auf der gleichen Axialseite wie die erste Anschlussseite 70 angeordnet. Der erste Anschlussflansch 200 erstreckt sich in einer Drehebene senkrecht zu der Drehachse 15 radial nach außen und ist radial außenseitig zu der ersten Anschlussseite 70 angeordnet. Radial außenseitig zu der zweiten Anschlussseite 75 und auch beispielhaft radial außenseitig zur ersten Kupplungsseite 80 erstreckt sich in einer weiteren Drehebene der zweite Befestigungsflansch 205 radial nach außen hin.

Radial innenseitig zu der ersten Kupplungsseite 80 erstreckt sich auf der Drehachse 15 die zweite Anschlussseite 75. Die zweite Anschlussseite 75 kann beispielsweise als Sackloch 210 im Verbinder 30 ausgebildet sein. Das Sackloch 210 kann ein viertes Gewinde 215 aufweisen, das korrespondierend zum ersten Gewinde 130 ausgebildet ist. Beispielhaft kann das vierte Gewinde 215 als erstes Innengewinde ausgebildet sein.

FIG 7 zeigt eine perspektivische Darstellung des in FIG 6 gezeigten Verbinders 30 mit in FIG 6 gezeigten Blickrichtung A auf den in FIG 6 gezeigten Verbinder 30.

Der erste Anschlussflansch 200 weist eine erste Aufnahme 245 auf, die nutförmig in der ersten Stirnseite 250 des Verbinders 30 umlaufend auf einer Kreisbahn um die Drehachse 15 ausgebildet ist. Die erste Anschlussseite 70 ist radial innenseitig zu der ersten Aufnahme 245 angeordnet.

FIG 8 zeigt eine perspektivische Darstellung mit einer in FIG 6 gezeigten Blickrichtung B auf den in FIG 6 gezeigten Verbinder 30.

An der zweiten Stirnseite 220 des Verbinders 30 ist die erste Kupplungsseite 80 an dem Verbinder 30 angeordnet. Die Kupplungsseite 80 weist mehrere sich in Axialrichtung erstreckende erste Klauen 225 auf, die in Umfangsrichtung versetzt zueinander angeordnet sind. An der zweiten Stirnseite 220 ist die zweite Anschlussseite 75 angeordnet. Die ersten Klauen 225 sind in radialer Richtung zwischen der zweiten Anschlussseite 75 und dem zweiten Befestigungsflansch 205 angeordnet. Insbesondere kann zur Zentrierung des Verbinders 30 an der ersten Längsseite 95 der ersten Rotationskomponente 20 an der zweiten Stirnseite 220 ein erster Zentriersteg 230 angeordnet sein, der hohlzylindrisch ausgebildet ist und sich in axialer Richtung von der ersten Stirnseite 220 weg erstreckt. Radial außenseitig ist zwischen einer ersten äußeren Umfangsseite 235 des Verbinders 30 und der ersten Kupplungsseite 80 eine sich auf einer Kreisbahn erstreckende zweite Aufnahme 240 des zweiten Befestigungsflanschs 205 angeordnet. Vorzugsweise sind mehrere in Umfangsrichtung versetzt zueinander in dem zweiten Befestigungsflansch 205 angeordnete zweite Aufnahmen 240 vorgesehen. Die zweite Aufnahme 240 ist als Durchgangsöffnung in axialer Richtung ausgebildet.

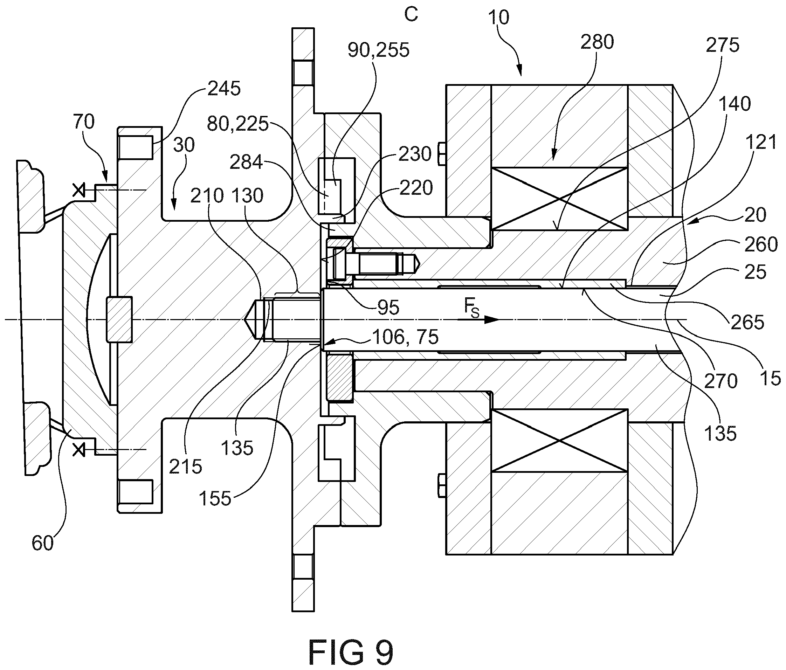

FIG 9 zeigt einen in FIG 4 markierten Ausschnitt C durch den in FIG 4 gezeigten Halblängsschnitt durch die in FIG 4 gezeigte Produktionsanlage 10.

An der ersten Anschlussseite 70 ist der zweite Gelenkwellenkopf 60 beispielsweise mittels mehrerer in Umfangsrichtung versetzt angeordneten Schrauben an dem Verbinder 30 drehfest befestigt. Auch wäre möglich, dass die Drehmomentübertragungseinrichtung 49, insbesondere die Gelenkwelle 50, besonders vorteilhafterweise der zweite Gelenkwellenkopf 60, und der Verbinder 30 einstückig und materialeinheitlich ausgebildet sind. Auch können die erste Kupplungsseite 80 und der Verbinder 30 einstückig und materialeinheitlich ausgebildet sein.

Der erste Gewindeabschnitt 130 ist mit dem ersten Gewinde 135 in das vierte Gewinde 215 der zweiten Anschlussseite 75 soweit eingeschraubt, dass die erste Absatzfläche 155 an der zweiten Stirnseite 220 anliegt und die erste Verbindung 106 ausbilden. Dadurch ist die Zugstange 25 mit dem Verbinder 30 verbunden und die Spannkraft Fₛ kann von der Zugstange 25 an den Verbinder 30 übertragen werden.

Radial außenseitig greifen die erste Kupplungsseite 80 und die zweite Kupplungsseite 90 formschlüssig ineinander ein. Insbesondere greifen die ersten Klauen 225 der ersten Kupplungsseite 80 in zweite Klauen 255 der zweiten Kupplungsseite 90 ein, so dass drehfest die Kupplungsseite 80 mit der Kupplungsausgangsseite 90 und somit der Verbinder 30 drehfest mit der ersten Rotationskomponente 20 verbunden ist.

In dem Hohlbereich 121 weist die erste Rotationskomponente 20 auf der zum ersten Längsende 95 zugewandten Seite eine erste Lagerbuchse 265 auf. Die erste Lagerbuchse 265 ist innenseitig zu der Welle 260 angeordnet. Die erste Lagerbuchse 265 weist an einer inneren ersten Umfangsseite eine erste Buchsenlagerfläche 270 auf. In der ersten Buchse 265 ist die Zugstange 25 mit dem ersten Lagerabschnitt 135 angeordnet, wobei die erste Lagerfläche 140 und die erste Buchsenlagerfläche 270 aneinander anliegen. Durch die erste Buchse 265 und den ersten Lagerabschnitt 235 ist die Zugstange 25 zentriert in der Welle 260 angeordnet.

Die zweite Kupplungsseite 90 ist an der ersten Längsseite 95 mit der Welle 260 drehfest verbunden. Beispielhaft kann die zweite Kupplungsseite 90 einen zweiten Zentriersteg 284 aufweisen, der stirnseitig an der zweiten Kupplungsseite 90 angeordnet ist. Der zweite Zentriersteg 284 kann in radialer Richtung beabstandet zu der zweiten Klaue 255 angeordnet sein und hohlzylindrisch ausgebildet sein. Im ersten Betriebszustand greift der erste Zentriersteg 230 in radialer Richtung zwischen die zweite Klaue 255 und den zweiten Zentriersteg 284 ein, so dass der Verbinder 30 in radialer Richtung definiert zu der Drehachse 15 ausgerichtet ist. Die Masse des Verbinders 30 und der ersten Kupplungsseite 80 wird über die Zentrierstege 230, 284 und die Welle 260 an der ersten Lageranordnung 280 abgestützt. Der radiale Versatz der zweiten Rotationskomponente 45 gegenüber der Drehachse 15 wird durch die Gelenkwelle 50 und insbesondere durch die schräg verlaufenden Verbindungswelle 65 gegenüber der Drehachse 15 ausgeglichen.

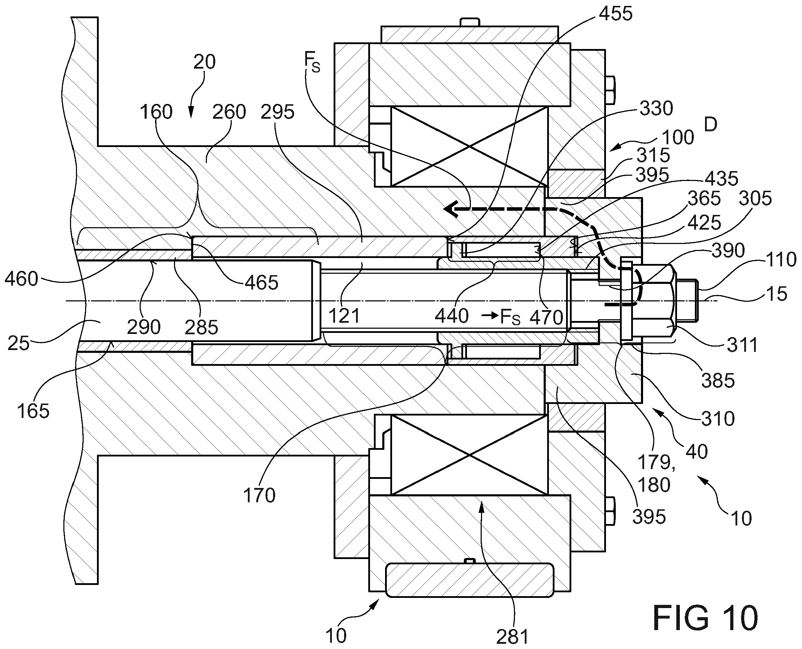

FIG 10 zeigt eine Schnittansicht eines in FIG 4 markierten Ausschnitt D durch die in FIG 4 gezeigt Produktionsanlage 10 im ersten Betriebszustand, wobei eine Schnittebene entlang der die in FIG 10 gezeigte Produktionsanlage 10 gegenüber dem in FIG 4 gezeigten Längsschnitt um die Drehachse 15 gedreht ist.

Die erste Rotationskomponente 20 weist beispielsweise ferner eine zweite Buchse 285 auf, die im Hohlbereich 121 der Welle 260 angeordnet ist. Die zweite Buchse 285 weist eine zweite Buchsenlagerfläche 290 an ihrer inneren zweiten Umfangsseite auf. Die zweite Buchse 285 wird durch die Zugstange 25 mit dem zweiten Lagerabschnitt 160 durchgriffen. Dabei liegt die zweite Lagerfläche 165 an der zweiten Buchsenlagerfläche 290 an, so dass die Zugstange 25 auf der zum zweiten Zugstangenlängsende 110 zugewandten axialen Seite durch die zweite Buchse 285 in der Welle 260 in radialer Richtung bezogen auf die Drehachse 15 gelagert ist.

Axial anschließend an die zweite Buchse 285 weist die erste Rotationskomponente 20 eine hohlzylindrisch um die Drehachse 15 ausgebildete Hülse 295 auf. Die Hülse 295 ist in dem Hohlbereich 121 angeordnet und wird durch die Zugstange 25 sowohl teilweise mit dem zweiten Lagerabschnitt 160 als auch mit dem ersten Spindelabschnitt 170 axial durchgriffen. Die Hülse 295 ist in radialer Richtung breiter ausgebildet als die zweite Buchse 285 und ist innenseitig in dem Hohlbereich 121 angeordnet. Auf der zum zweiten Längsende 100 zugewandten Axialseite der Hülse 295 und somit auf einer zur zweiten Buchse 285 abgewandten Seite ist die Ausrückeinrichtung 40 angeordnet.

Die Ausrückeirichtung 40 weist eine Spindelmutter 305, ein Mitnahmeelement 310, ein Befestigungsmittel 311 und einen Anschlussflansch 315 auf. Der Anschlussflansch 315 ist an der zweiten Längsseite 100 der zweiten Rotationskomponente beispielsweise mittels einer Schraubverbindung drehfest mit der Welle 260 verbunden. Die als Hohlwelle ausgebildete Welle 260 nimmt zumindest abschnittsweise angrenzend an die zweite Längsseite 100 den Anschlussflansch 315 auf. Die Spindelmutter 305 ist beispielhaft radial innenseitig zu dem Anschlussflansch 315 angeordnet und wird von dem Anschlussflansch 315 im Wesentlichen aufgenommen. Auf einer dem Verbinder 30 abgewandten Seite des Anschlussflanschs 315 ist das Wendelement 310 an dem Anschlussflansch 315 angeordnet. Sowohl als die Spindelmutter 305 als auch das Mitnahmeelement 310 werden durch die Zugstange 25 axial durchgriffen.

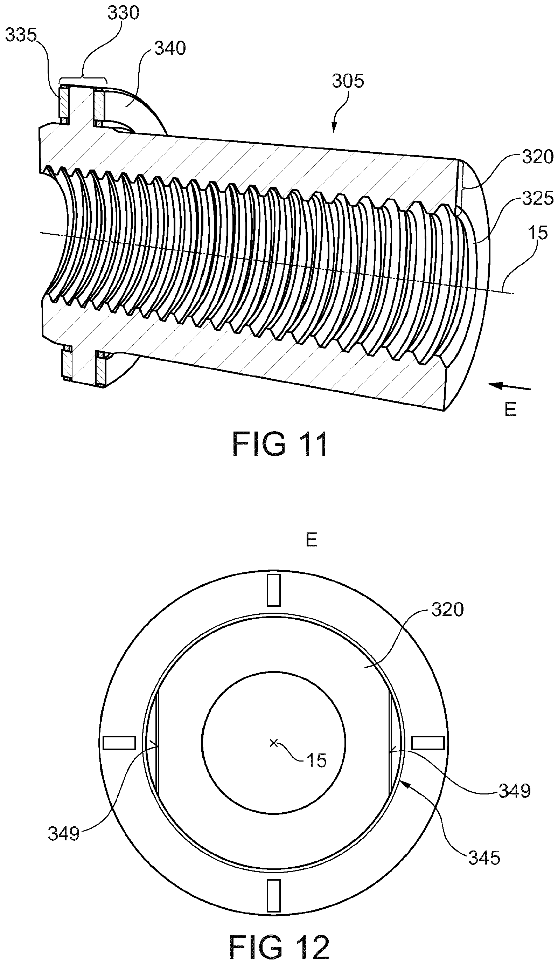

FIG 11 zeigt einen perspektivischen Halblängsschnitt durch die Spindelmutter 305.

Die Spindelmutter 305 weist einen hohlkörperartig ausgebildeten zweiten Spindelabschnitt 320 mit einem zum zweiten Außengewinde des zweiten Gewindes 175 korrespondierend oder komplementär ausgebildeten zweiten Innengewinde 325 auf. Das zweite Innengewinde 325 erstreckt sich in Axialrichtung über den gesamten zweiten Spindelabschnitt 320.

An einer äußeren zweiten Umfangsseite weist die Spindelmutter 305 einen radial nach außen sich erstreckenden Lagersteg 330 auf. Der Lagersteg 330 ist auf einer der ersten Längsseite 95 zugewandten Seite des zweiten Spindelabschnitts 330 angeordnet. Der Lagersteg 330 ist radial innenseitig mit dem zweiten Spindelabschnitt 320 verbunden. Vorzugsweise sind der zweite Spindelabschnitt 320 und der Lagersteg 330 einstückig und materialeinheitlich ausgebildet. Der Lagersteg 330 erstreckt sich in einer Drehebene senkrecht zu der Drehachse 15 von dem zweiten Spindelabschnitt 320 radial nach außen weg.

Auf einer dem Verbinder 30 zugewandten Axialseite des Lagerstegs 330 weist die Spindelmutter 305 an dem Lagersteg 330 ein erstes Axiallager 335 und auf einer dem Verbinder 30 abgewandten Axialseite des Lagerstegs 330, die dem zweiten Längsende 100 der Rotationskomponente 20 zugewandt ist, ein zweites Axiallager 340 auf. Das erste Axiallager 335 und/oder das zweite Axiallager 340 können als Wälzlager oder Gleitlager ausgebildet sein. Insbesondere wäre eine Ausgestaltung des Axiallagers 335, 340 als Nadellager möglich.

FIG 12 zeigt eine Draufsicht mit einer in FIG 10 gezeigten Blickrichtung E auf die in FIG 11 gezeigte Spindelmutter 305.

An der zweiten äußeren Umfangsseite des zweiten Spindelabschnitts 320 weist der zweite Spindelabschnitt 320 einen profilierten Bereich 345 auf. Der profilierte Bereich 345 schließt sich in axialer Richtung stirnseitig an ein der zweiten Längsseite zugewandtes Axialende des zweiten Spindelabschnitts 320 an. Der profilierte Bereich 345 erstreckt sich in axialer Richtung über einen Teilbereich des zweiten Spindelabschnitts 320 und weist jeweils beispielhaft zwei in radialer Richtung gegenüberliegend zu der Drehachse 15 angeordnete erste Anlageflächen 349 auf, die tangential zu der Drehachse 15 ausgerichtet sind und parallel zueinander verlaufend ausgerichtet sind. Die ersten Anlageflächen 349 dienen dazu, ein Demontagedrehmoment M_{D} oder ein Montagedrehmoment M_{M} zum Verdrehen der Spindelmutter 305 relativ um die Drehachse 15 in den zweiten Spindelabschnitt 320 einzuleiten.

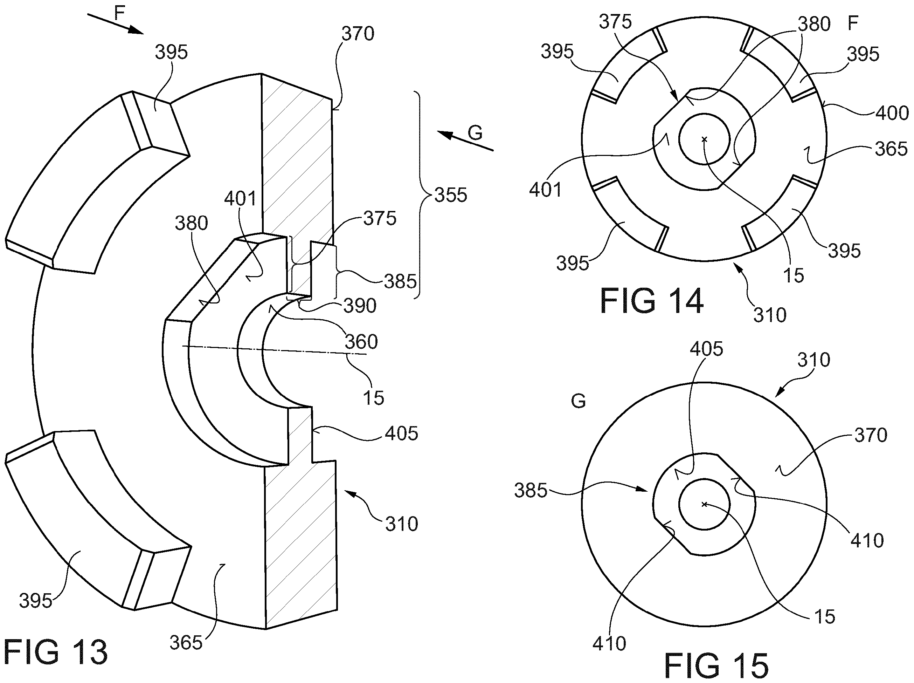

FIG 13 zeigt einen perspektivischen Halblängsschnitt durch das Mitnahmeelement 310.

Das Mitnahmeelement 310 weist einen im Wesentlichen ringförmig um die Drehachse 15 verlaufenden Wendeabschnitt 355 auf. Der Wendeabschnitt 355 weist ferner eine plattenartige Ausgestaltung auf. Radial innenseitig wird der Wendeabschnitt durch eine erste Durchführung 360 begrenzt. Die erste Durchführung 360 kann bohrungsartig ausgebildet sein. Eine erste Wendestirnseite 365 des Mitnahmeelements 310 und eine axial gegenüberliegend zu der ersten Wendestirnseite 365 angeordnet zweite Wendestirnseite 370 erstrecken sich im Wesentlichen in axialer Richtung versetzt angeordneten Drehebenen und sind im Wesentlichen plan ausgebildet.

Radial innenseitig ist axial angrenzend an die erste Wendestirnseite 365 ein erster Eingriffsabschnitt 375 in dem Wendeabschnitt 355 angeordnet. Radial außenseitig schließt sich der erste Eingriffsabschnitt 375 an die erste Durchführung 360 an. Der erste Eingriffsabschnitt 375 weist ein erstes Eingriffsprofil auf, das korrespondierend zu dem profilierten Bereich 345 ausgebildet ist. Dabei weist der erste Eingriffsabschnitt 375 zwei in radialer Richtung gegenüberliegend angeordnete zweite Anlageflächen 380 auf (in FIG 13 nur eine der beiden Anlageflächen 380 dargestellt) die tangential zur Drehachse 15 ausgerichtet sind und parallel zueinander ausgerichtet sind. Der erste Eingriffsabschnitt 375 erstreckt sich in axialer Richtung nur über einen Teilbereich einer maximalen Erstreckung des Wendeabschnitts 355 in axialer Richtung.

Axial gegenüberliegend zu dem ersten Eingriffsabschnitt 375 weist das Mitnahmeelement 310 beispielhaft einen zweiten Eingriffsabschnitt 385 auf, wobei der zweite Eingriffsabschnitt 385 axial sich an die zweite Wendestirnseite 370 anschließt und sich in Richtung des ersten Wendeabschnitts 375 erstreckt. Der zweite Eingriffsabschnitt schließt sich radial außenseitig an die erste Durchführung 360 an. Der zweite Eingriffsabschnitt 385 weist das Eingriffsprofil des ersten Eingriffsabschnitts 375 auf. Somit sind abgesehen von der axialen Anordnung des ersten und zweiten Eingriffsabschnitts 375, 385 die Eingriffsabschnitte 375, 385 identisch zueinander ausgebildet. Axial werden der erste Eingriffsabschnitt 375 und der zweite Eingriffsabschnitt 385 durch einen zweiten Absatz 390 voneinander getrennt, wobei sich an dem zweiten Absatz 390 radial innenseitig die Durchführung 360 radial innenseitig anschließt.

FIG 14 zeigt eine erste Seitenansicht mit einer in FIG 13 gezeigten Blickrichtung F auf das in FIG 13 gezeigte Mitnahmeelement 310.

An der ersten Stirnseite 365 kann das Mitnahmeelement 310 wenigstens ein Eingriffselement 395 aufweisen. Das Eingriffselement 395 schließt sich beispielhaft in radialer Richtung an eine dritte äußere Umfangsseite 400 des Wendeabschnitts 355 an. Selbstverständlich kann der Eingriffsabschnitt 395 auch radial nach innen hin mit radialem Abstand zu der dritten äußeren Umfangsseite 400 angeordnet sein. Radial nach innen hin ist das Eingriffselement 395 beabstandet beispielhaft zu dem ersten Eingriffsabschnitt 375 angeordnet. In axialer Richtung schließt sich das Eingriffselement 395 an die erste Wendestirnseite 365 an und ragt in axialer Richtung über die erste Wendestirnseite 365 heraus. Das Eingriffselement 395 kann auf einer Kreisbahn um die Drehachse 15 verlaufend ausgebildet sein und teilringförmig ausgestaltet sein. Vorzugsweise sind mehrere in Umfangsrichtung versetzt zueinander angeordnete Eingriffselemente 395 an der ersten Wendestirnseite 365 angeordnet. Beispielhaft ist in FIG 14 ein Abstand der Eingriffselemente 395 zueinander regelmäßig. Auch ein unregelmäßiger Abstand, beispielsweise um eine definierte Ausrichtung des Mitnahmeelements 310 zu dem Anschlussflansch 315 festzulegen, wäre möglich.

In einer Weiterbildung des Mitnahmeelements wird beispielhaft auf das Eingriffselement 395 verzichtet. Auch kann ein erstes Werkzeug 510 mit dem Mitnahmeelement 310 dauerhaft verbunden sein. So können beispielsweise das erste Werkzeug 510 und das Mitnahmeelement 310 einstückig und materialeinheitlich ausgebildet sein.

Der zweite Absatz 395 weist auf einer der ersten Wendestirnseite 395 zugewandten Seite eine zweite Absatzfläche 401 auf. Die zweite Absatzfläche 401 verläuft in einer Drehebene senkrecht zur Drehachse 15.

FIG 15 zeigt eine Seitenansicht mit einer in FIG 13 gezeigten zweiten Blickrichtung G auf das in FIG 13 gezeigte Mitnahmeelement 310.

Die zweite Wendestirnseite 370 ist plan ausgebildet. Auf der zur zweiten Wendestirnseite 370 zugewandten Seite des zweiten Absatzes 390 weist der zweite Absatz 390 eine dritte Absatzfläche 405 auf, die parallel zu der zweiten Wendestirnseite 370 ausgerichtet ist. Der zweite Eingriffsabschnitt 385 kann beispielsweise zwei in radialer Richtung gegenüberliegend angeordnete dritte Anlageflächen 410 aufweisen, die tangential ausgerichtet sind. Die Ausrichtung der dritten Anlagefläche 410 kann korrespondierend zur Ausrichtung der zweiten Anlagefläche 380 in Umfangsrichtung sein.

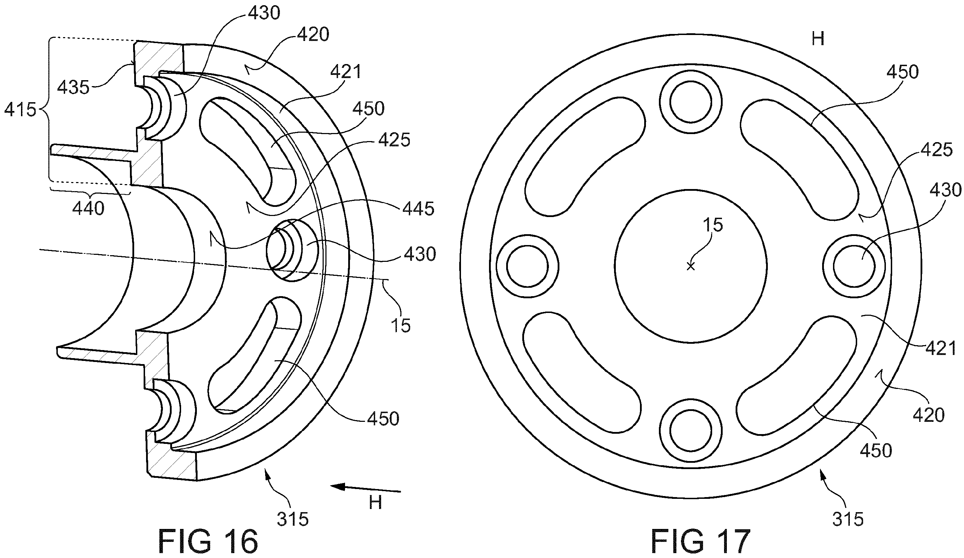

FIG 16 zeigt einen Halblängsschnitt durch den Anschlussflansch 315.

Der Anschlussflansch 315 weist beispielsweise einen ringförmig ausgebildeten Flanschabschnitt 415 auf. Der Flanschabschnitt 415 erstreckt sich umlaufend um die Drehachse 15. In dem Flanschabschnitt 415 ist angrenzend an eine erste Flanschstirnseite 420 beispielsweise eine Mitnahmeelementaufnahme 421 angeordnet. Die Mitnahmeelementaufnahme 421 ist zumindest in radialer Richtung korrespondierend oder größer als die dritte äußere Umfangsseite 400 des Mitnahmeelements 310 ausgebildet. Die Mitnahmeelementaufnahme 421 ist hinzu der ersten Flanschstirnseite 420 offen ausgebildet.

Die Mitnahmeelementaufnahme 421 weist einen Aufnahmegrund 425 auf, der in einer Drehebene senkrecht zu der Drehachse 15 verläuft. In dem Aufnahmegrund 425 sind beispielsweise ein oder mehrere Befestigungsöffnungen 430 angeordnet, um jeweils eine Schraube zur Befestigung des Anschlussflanschs 315 an der Welle 260 aufzunehmen. Die Befestigungsöffnungen 430 können in regelmäßigem Abstand zueinander in dem Aufnahmegrund 425 angeordnet sein.

Auf einer zur ersten Flanschstirnseite 420 axial gegenüberliegenden Seite weist der Flanschabschnitt 415 eine zweite Flanschstirnseite 435 auf, die sich in einer Drehebene senkrecht zur Drehachse 15 erstreckt. Der Anschlussflansch 315 weist beispielsweise einen Hülsenabschnitt 440 auf, wobei der Hülsenabschnitt 440 hohlzylindrisch ausgebildet ist. Der Hülsenabschnitt 440 ist angrenzend an die zweite Flanschstirnseite 435 angeordnet und erstreckt sich axial vom Flanschabschnitt 415 weg. Der Flanschabschnitt 415 und der Hülsenabschnitt 440 können einstückig und materialeinheitlich ausgebildet sein. Der Hülsenabschnitt 440 ist in radialer Richtung breiter ausgebildet als eine zweite Durchführung 445, die radial innenseitig in dem Flanschabschnitt 415 angeordnet ist.

FIG 17 zeigt eine Seitenansicht mit einer in FIG 16 gezeigten Blickrichtung H auf den in FIG 16 gezeigten Anschlussflansch 315.

Der Anschlussflansch 315 weist beispielsweise wenigstens eine, vorzugsweise mehrere, beabstandet in Umfangsrichtung angeordnete Eingriffselementaufnahmen 450 auf. Die Eingriffselementaufnahme 450 kann langlochförmig auf einer Kreisbahn um die Drehachse 15 verlaufend ausgebildet sein. Die Eingriffselementaufnahme 450 und die Befestigungsöffnung 430 sind beispielsweise auf einer gemeinsamen Kreisbahn um die Drehachse 15 angeordnet.

Die Eingriffselementaufnahme 450 kann beispielhaft in Umfangsrichtung breiter ausgebildet sein als das Eingriffselement 395. Zwischen jeweils zwei in Umfangsrichtung nächstliegend angeordneten Eingriffselementaufnahmen 450 ist beispielhaft jeweils eine Befestigungsöffnung 430 angeordnet. Vorzugsweise entspricht die Anzahl der Eingriffselemente 395 einer Anzahl der Eingriffselementaufnahmen 450.

Im Folgenden wird auf die FIGN 10 bis 17 gemeinsam Bezug genommen, wobei der montierte Zustand der Produktionsanlage 10 in FIG 10 im ersten Betriebszustand dargestellt ist.

In montiertem Zustand greift der Hülsenabschnitt 440 in den Hohlbereich 121 der Welle 260 ein an der zweiten Längsseite 100 ein und liegt stirnseitig an einer ersten Hülsenstirnseite 455 an. Axial gegenüberliegend stützt sich eine zweite Hülsenstirnseite 460 der Hülse 295 an einem Wellenabsatz 465 der Welle 260 im Hohlbereich 121 ab. Der Anschlussflansch 315 ist beispielsweise mittels Schrauben an der zweiten Längsseite 100 der ersten Rotationskomponente 20 befestigt. Radial innenseitig zu dem Hülsenabschnitt 440 ist abschnittsweise die Spindelmutter 305 angeordnet. Ferner durchgreift die Spindelmutter 305 zumindest mit dem profilierten Bereich 345 die zweite Durchführung 445.

Die Spindelmutter 305 greift beispielhaft mit dem Lagersteg 330 und den beiden Axiallagern 335, 340 in einen Axialspalt 470 ein, der zum einen durch die erste Hülsenstirnseite 455 auf einer der ersten Längsseite 95 zugewandten Seite und durch einen radial innenseitig zu dem Hülsenabschnitt 440 angeordneten Bereich der zweiten Flanschstirnseite 435 begrenzt wird. In radialer Richtung nach außen hin wird der Axialspalt durch den Hülsenabschnitt 440 begrenzt. Im ersten Betriebszustand kann das erste Axiallager 335 beispielsweise an der ersten Hülsenstirnseite 455 anliegen. Dabei bildet die erste Hülsenstirnseite 455 eine erste Axiallagerfläche aus.

Radial innenseitig greift mit dem zweiten Innengewinde 325 der zweite Spindelabschnitt 320 in das als zweites Außengewinde ausgebildete zweite Gewinde 175 des ersten Spindelabschnitts 170 der Zugstange 25 ein.

Das Mitnahmeelement 315 in der Wendelementaufnahme 421 angeordnet. Im ersten Betriebszustand ist das Wendelement 315 in der ersten Ausrichtung in die Mitnahmeelementaufnahme 421 eingeschoben. In der ersten Ausrichtung des Mitnahmeelements 310 greift jeweils ein Eingriffselement 395 in jeweils eine Eingriffselementaufnahme 450 ein und bildet eine formschlüssige zweite Verbindung aus. Durch die zweite Verbindung zwischen Mitnahmeelement 310 und Spindelmutter 305 und Mitnahmeelement 310 und Flanschelement 315 ist die Spindelmutter 305 im ersten Betriebszustand verdrehsicher befestigt.

Ferner ist die erste Wendestirnseite 365 Mitnahmeelementin der ersten Ausrichtung beabstandet zu dem Aufnahmegrund 425 angeordnet. Ein weiterer Teil des Wendelements 315 ragt beispielhaft über die erste Flanschstirnseite 420 an der zweiten Längsseite 100 der zweiten Rotationskomponente 45 heraus. Der profilierte Bereich 345 greift in den ersten Eingriffsabschnitt 375 ein. Durch das aneinanderliegen der ersten und zweiten Anlagefläche 349, 380 ist das Mitnahmeelement formschlüssig drehfest mit der Spindelmutter verbunden.

Der Befestigungsabschnitt 179 der Zugstange 25 durchgreift die erste Durchführung 360 und ragt an der zweiten Längsseite 100 sowohl über die zweite Absatzfläche 401 als auch die erste Wendestirnseite 365 heraus.

Im ersten Betriebszustand ist an dem Befestigungsabschnitt 179 der Zugstange 25 das zweite Befestigungsmittel 311 angeordnet. Beispielsweise kann das zweite Befestigungsmittel als Schraubenmutter ausgebildet sein, die auf den zweiten Gewindeabschnitt 180 aufgeschraubt ist und in den zweiten Eingriffsabschnitt 385 des Mitnahmeelements 310 zumindest abschnittsweise eingreift. Dabei liegt das zweite Befestigungsmittel 311 in der ersten Ausrichtung des Mitnahmeelements 310 an der dritten Absatzfläche 405 axial an. Das zweite Befestigungsmittel 311 ist vorzugsweise derart auf dem Befestigungsabschnitt 179 befestigt, dass der Antriebsabschnitt 190 der Zugstange 25 stirnseitig auf der zur zweiten Längsseite 100 zugewandten Seite über das zweite Befestigungsmittel 311 axial herausragt.

Das zweite Befestigungsmittel 311 ist ausgebildet, die Spannkraft Fₛ von der Zugstange 25 an den zweiten Absatz 390 des Mitnahmeelements 310 zu übertragen (ein Kraftfluss ist in FIG 10 mittels strichlierter Linie dargestellt). In der ersten Ausrichtung des Mitnahmeelements 310 greift jeweils ein Eingriffselement 395 in jeweils eine zugeordnete Eingriffselementaufnahme 450 ein. Dabei liegt stirnseitig das Eingriffselement 395 an seinem freien Ende stirnseitig der Welle 260 an. Die Spannkraft F_{S} wird von dem Eingriffselement 395 an die Welle 260 übertragen. Dadurch ist der Kraftschluss innerhalb der Produktionsanlage 10 für die Spannkraft F_{S} geschlossen und eine zuverlässige Drehmomentübertragung zwischen der zweiten Rotationskomponente 45 und der ersten Rotationskomponente 20 ist in dem ersten Betriebszustand sichergestellt.

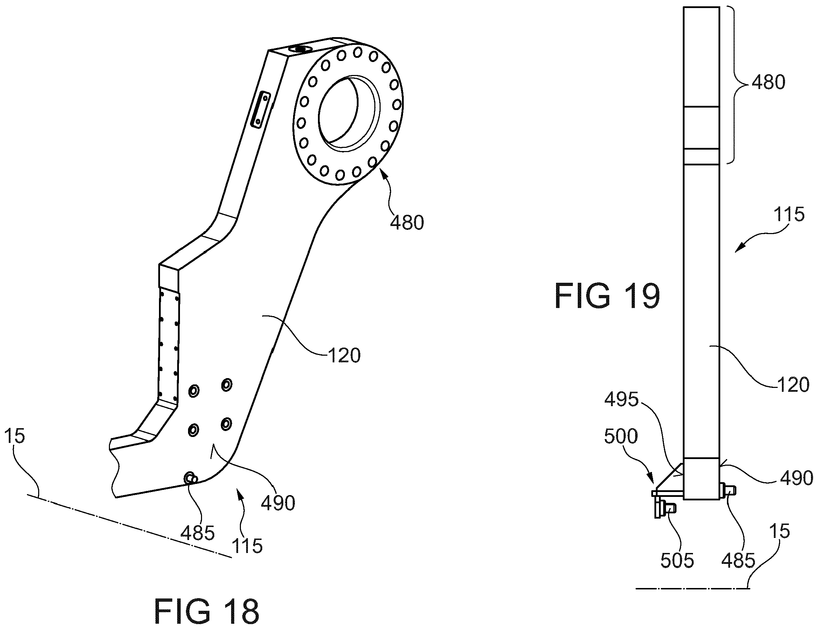

FIG 18 zeigt eine perspektivische Darstellung der Halteeinrichtung 115.

Die Halteeinrichtung 115 weist beispielsweise den Träger 120 auf. Der Träger 120 kann an einem Verbindungsabschnitt 480 beispielsweise an einem weiteren Träger, beispielsweise des Walzgerüstes der Walzstraße, befestigt sein. Eine weitere Ausführungsform kann dahingehend ausgeführt werden, dass die Halteeinrichtung wahlweise an der Maschine oder ortsfest an einem Hüttenflur angebracht wird. An der zum Verbindungsabschnitt 480 radial innenliegenden Seite weist die Halteeinrichtung 115 wenigstens ein erstes Halteelement 485 auf, das an dem Träger 120 befestigt ist. Das erste Halteelement 485 kann beispielsweise ein Haltebolzen sein, der über eine erste Trägerstirnseite 490 des Trägers 120 hervorragt. Das erste Halteelement 485 ist derart ausgebildet, dass es in die zweite Aufnahme 240 des Verbinders 30 eingreifen kann.

FIG 19 zeigt eine Seitenansicht auf die in FIG 18 gezeigte Halteeinrichtung 115.

Zusätzlich kann die Halteeinrichtung 115 beispielsweise auf einer zur ersten Trägerstirnseite 490 axial gegenüberliegend angeordneten zweiten Trägerstirnseite 495 einen Halter 500 aufweisen. Der Halter 500 ist an einer Seite mit dem Träger 120 an der zweiten Trägerstirnseite 495 befestigt. Auf einer zur zweiten Trägerstirnseite 495 abgewandten Seite des Halters 500 ist beispielsweise ein zweites Halteelement 505 angeordnet. Das zweite Halteelement 505 kann beispielsweise ein zweiter Haltebolzen sein. Das zweite Halteelement 505 ist beispielhaft radial versetzt zu dem ersten Halteelement 485 angeordnet. Sowohl das erste Halteelement 485 als auch das zweite Halteelement 505 erstrecken sich von einem festen Ende, an dem das jeweilige Halteelement 485, 505 befestigt ist, in der gleichen axialen Richtung zu einem freien Ende. Das zweite Halteelement 505 ist derart ausgebildet, dass es in die erste Aufnahme 245 des Verbinders 30 eingreifen kann.

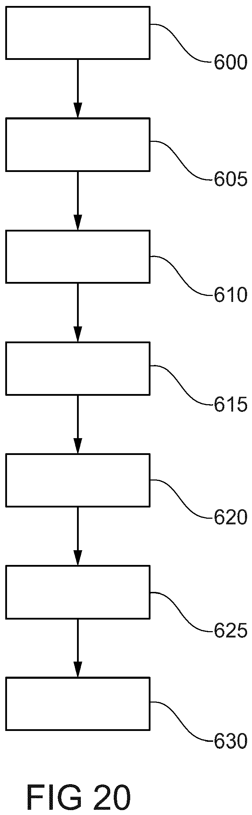

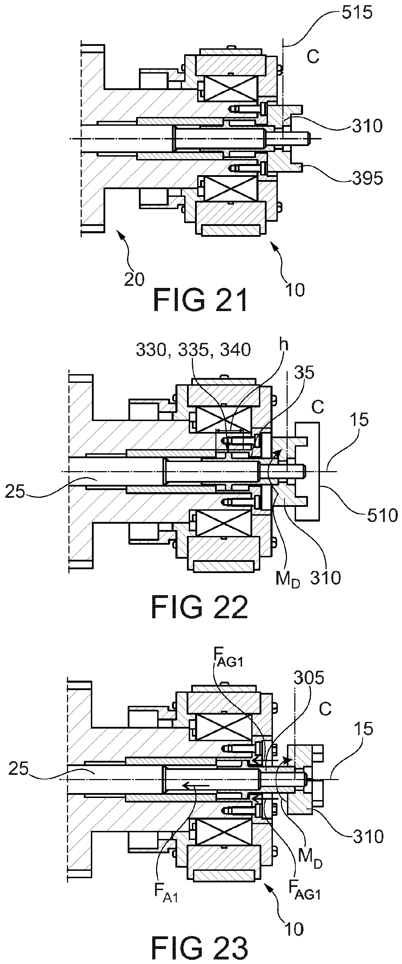

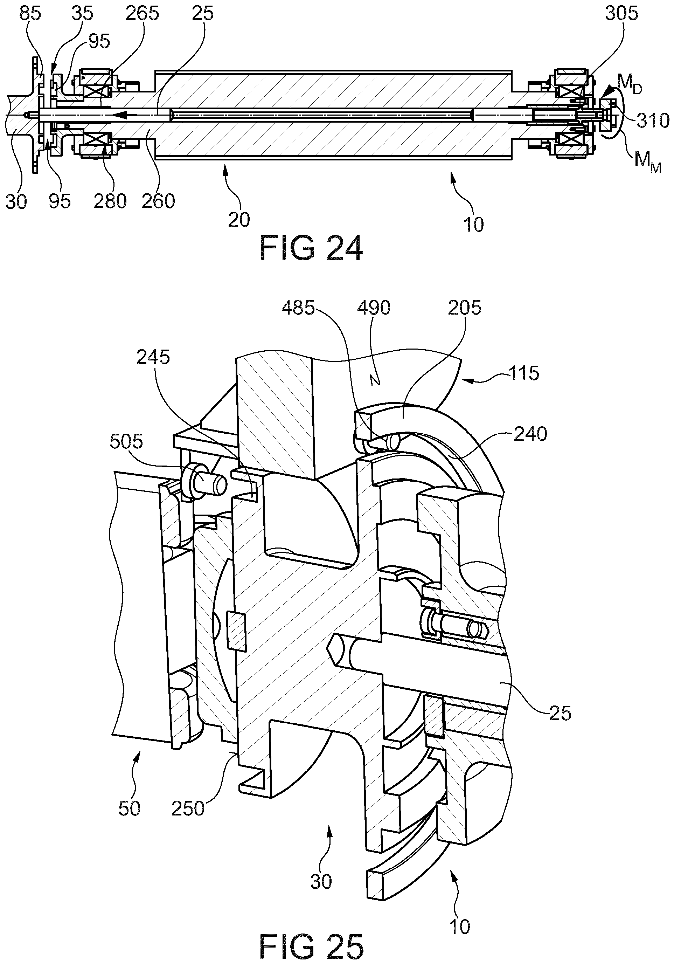

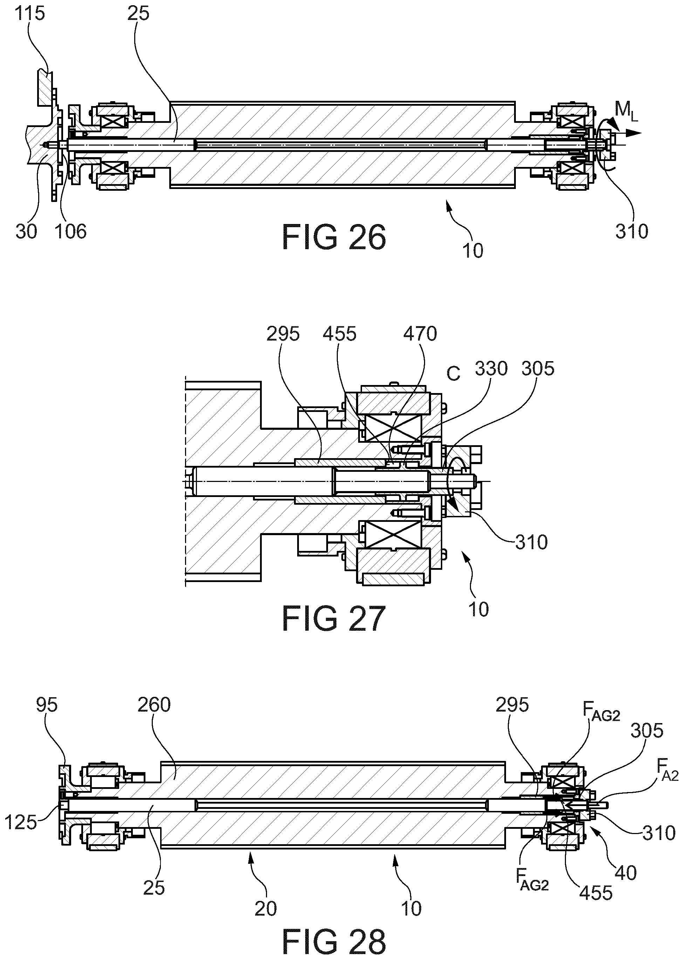

FIG 20 zeigt ein Ablaufdiagramm eines Verfahrens zur Demontage der in den FIGN 1 bis 17 gezeigten Produktionsanlage 10. FIG 21 zeigt den in FIG 4 markierten Ausschnitt C während eines zweiten Demontageschritts 605. FIG 22 zeigt den in FIG 4 markierten Ausschnitt C der Produktionsanlage 10 während eines dritten Demontageschritts 610. FIG 23 zeigt den in FIG 4 gezeigten Ausschnitt C der Produktionsanlage 10 während eines vierten Demontageschritts 615. FIG 24 zeigt einen Ausschnitt der Produktionsanlage 10 während des vierten Demontageschritts 615. FIG 25 zeigt einen Ausschnitt eines Halblängsschnitts der Produktionsanlage 10 kurz vor Erreichen der zweiten Position der Zugstange 25. FIG 26 zeigt einen Ausschnitt eines Halblängsschnitts durch die Produktionsanlage 10 während eines sechsten Demontageschritts 625. FIG 27 zeigt den in FIG 4 markierten Ausschnitt C durch die Produktionsanlage 10 während des siebten Demontageschritts 630. FIG 28 zeigt einen Halblängsschnitt durch die Produktionsanlage 10 nach einem siebten Demontageschritt 630.

Es wird darauf hingewiesen, dass die im Folgenden beschriebenen Demontageschritte beispielhaft sind und vorzugsweise in der angegebenen Reihenfolge durchgeführt werden. Selbstverständlich ist eine andere Reihenfolge möglich und/oder kann auf einzelne Demontageschritte verzichtet werden.

In einem ersten Demontageschritt 600 wird das zweite Befestigungsmittel 311, beispielsweise die Schraubenmutter, von dem Befestigungsabschnitt 179 gelöst.

Im zweiten Demontageschritt 605 (vgl. FIG 21) wird das Mitnahmeelement 310 beispielsweise in Axialrichtung entlang der Drehachse 15 abgezogen und zur Überführung des Mitnahmeelements 310 in eine zweite Ausrichtung um 180° um eine zweite Rotationsachse 515, die senkrecht zur Drehachse 15 verläuft, gedreht. In der zweiten Ausrichtung ist das Eingriffselement 395 auf einer der ersten Rotationskomponente 20 abgewandten Seite angeordnet und das Eingriffselement 395 ist von der zweiten Längsseite 100 frei zugänglich.
In der zweiten Ausrichtung wird das Mitnahmeelement 310 mit dem zweiten Eingriffsabschnitt 385 auf den profilierten Bereich 345 aufgesteckt. Dadurch ist neben dem in der ersten Position vorhandenen Formschluss durch den Eingriff des profilierten Bereichs 345 in den ersten Eingriffsabschnitt 375 auch in der zweiten Ausrichtung des Mitnahmeelements 310 ein Formschluss durch den Eingriff des profilierten Bereichs 345 in dem zweiten Eingriffsabschnitt 385 gegeben. Im dritten Demontageschritt 610 (vgl. FIG 22) wird das erste Werkzeug 510 auf bzw. an dem Mitnahmeelement 310 angesetzt.

Wird, wie oben, auf das Eingriffselement 395 verzichtet, kann ferner auch auf den zweiten Demontageschritt verzichtet werden. In diesem Fall ist von Vorteil, wenn das erste Werkzeug 510 mit dem Mitnahmeelement 310 dauerhaft mechanisch verbunden ist. Dadurch kann ferner auf das Aufsetzen des ersten Werkzeugs 510 verzichtet werden. Ferner kann auf das Drehen des Mitnahmeelements 310 um die zweite Rotationsachse 515 verzichtet werden, sodass das Mitnahmeelement 310 dauerhaft in der ersten Ausrichtung an der Spindelmutter 305 verbleibt.

Das erste Werkzeug bildet beispielsweise einen Formschluss mit dem Eingriffselement 395 aus. Über das erste Werkzeug 510 wird als Verdrehmoment ausgebildete ein Demontagedrehmoment M_{D} mit einer ersten Drehrichtung in das Mitnahmeelement 310 eingeleitet.

Mittels des Formschlusses zwischen Mitnahmeelement 310 und dem profilierten Bereich 345 wird das Verdrehmoment über die erste und dritte Anlagefläche 349, 410 an die Spindelmutter 305 übertragen und die Spindelmutter 305 um die Drehachse 15 gedreht. Dabei bleibt die Zugstange 25 durch die formschlüssige Kopplung der ersten Kupplungsseite 80 mit der zweiten Kupplungsseite 90 in Umfangsrichtung in der ersten Position bzw. wird ein erstes Gegenmoment zum Demontagemoment M_{D} von der zweiten Rotationskomponente 45 bereitgestellt. Auch kann mittels zweiten Werkzeugs, das beispielsweise auf den Antriebsabschnitt 190 der Zugstange 25 aufgesetzt wird, das erste Gegenmoment bereitgestellt werden.

Auch in axialer Richtung verbleibt die Zugstange 25 durch die innere Reibung der Zugstange 25 an den Buchsen 265, 285 in ihrer Position. Beim Verdrehen der Spindelmutter 305 bewegen sich der Lagersteg 330 und die daran angeordneten Axiallager 335, 340 in Richtung der zweiten Flanschstirnseite 435 und führen dabei einen Hub h in axialer Richtung durch. Der Hub h des Lagerstegs 330 und der daran angeordneten Axiallager 335, 340 wird durch einen axialen Abstand der zweiten Flanschstirnseite 435 und der ersten Hülsenstirnseite 455 definiert festgelegt. Der Hub h ist dabei der axiale Abstand der zweiten Flanschstirnseite 435 zu der ersten Hülsenstirnseite 455 abzüglich der axialen Erstreckung des ersten und zweiten Axiallagers 335, 340 sowie des Lagerstegs 330. Diesen Hub h führt im dritten Demontageschritt 610 der Lagersteg 330 solange durch, bis das zweite Axiallager 340 in Berührkontakt mit der zweiten Flanschstirnseite 435 tritt und die zweite Flanschstirnseite eine zweite Axiallagerfläche ausgebildet. Von besonderem Vorteil ist dabei, wenn die maximale Gewindelänge 1 des ersten Gewindes 130 geringer ist als der Hub h des Lagerstegs 330.

Im vierten Demontageschritt 615 (vgl. FIG 23) wird weiter, wie auch im dritten Demontageschritt 610 das Mitnahmeelement 310 mittels des Demontagedrehmoments M_{D} um die Drehachse 15 in die erste Drehrichtung weiter gedreht. Dabei liegt das zweite Axiallager 340 an der zweiten Flanschstirnseite 435 an, die die zweite Axiallagerfläche ausgebildet. Dadurch ist eine weitere axiale Bewegung der Spindelmutter 305 von der ersten Längsseite 95 in Richtung der zweiten Längsseite 100 durch das Anliegen blockiert. Die Verdrehung der Spindelmutter 305 durch das Mitnahmeelement 310 in die erste Drehrichtung bewirkt, dass das Demontagedrehmoment M_{D} durch den Eingriff der Spindelmutter 305 in den ersten Spindelabschnitt 170 in eine erste Axialkraft F_{A1} umgesetzt wird, die die Zugstange 25 aus der ersten Position in Richtung der zweiten Position axial verschiebt. Eine zur ersten Axialkraft korrespondierende erste Axialgegenkraft F_{AG1} wird über die als zweite Axiallagerfläche wirkende zweite Flanschstirnseite 435 abgestützt. Mittels der ersten Axialkraft F_{A1} wird über die die Zugstange 25 der Verbinder 30, die erste Kupplungsseite 80 und die Gelenkwelle 50 aus der ersten Position in Richtung der zweiten Position bewegt. Dabei schieben sich die Teile der Verbindungswelle 65 der Gelenkwelle 50 ineinander.

Während der Überführung der Zugstange 25 aus der ersten Position in die zweite Position wird die drehmomentschlüssige Kopplung der ersten Kupplungsseite 80 mit der zweiten Kupplungsseite 90 aufgehoben und die Kupplung 35 vom geschlossenen Zustand in den geöffneten Zustand überführt (vgl. FIGN 24 und 25). Ferner erfolgt keine axiale Abstützung von Kräften aus dem Verbinder 30 wie im ersten Betriebszustand über den Zentriersteg 230, 284. In diesem Zustand stützt der erste Lagerabschnitt 135 über die erste Lagerfläche 140 Radialkräfte sowohl als aus dem Verbinder 30, der ersten Kupplungsseite 85 und der Gelenkwelle 50, insbesondere Massenkräfte an der ersten Buchsenlagerfläche 270 der ersten Buchse 265 ab. Die erste Buchse 265 stützt sich radial au-βenseitig über die Welle 260 an der ersten Lageranordnung 280 ab. Dies hat den Vorteil, dass ein ungewolltes Herunterfallen und Ausklappen der Gelenkwelle 50 vermieden wird. Ferner kann auf ein zusätzliches Befestigen der Gelenkwelle 50, beispielsweise mittels eines Krans oder eines Auflagers, um ein Herunterklappen bzw. Herunterfallen der Gelenkwelle 50 zu verhindern, verzichtet werden.

Die Halteeinrichtung 115, insbesondere die Halteelemente 485, 505 sind korrespondierend zu der ersten und zweiten Aufnahme 240, 245 ausgerichtet (vgl. FIG 25), sodass bei Bewegung der Zugstange 25 von der ersten Position in die zweite Position das erste Halteelement 485 in die zweite Aufnahme 240 und das zweite Halteelement 505 in die erste Aufnahme 245 in einem fünften Demontageschritt 620 fluchtend ausgerichtet sind und eingeführt werden.

In der zweiten Position kann beispielhaft die erste Stirnseite 250 an einem Bund des zweiten Halteelements 505 anliegen. Zusätzlich oder alternativ kann ferner der zweite Flanschabschnitt 205 an der ersten Trägerstirnseite 490 in der zweiten Position der Zugstange anliegen. Im fünften Demontageschritt wird der zweite Betriebszustand wie in FIG 2 gezeigt erreicht.

In der zweiten Position werden der Verbinder 30 sowie die Gelenkwelle 50 über die Halteelemente 485, 505 durch den Träger 120 radial gestützt. Die langlochförmige Ausgestaltung der zweiten Aufnahme 240 bzw. die nutförmige entlang der Kreisbahn umlaufend ausgestaltete erste Aufnahme 245 stellen sicher, dass in nahezu jeder Position in Umfangsrichtung der Verbinder 30 auf die Halteeinrichtung 115 aufgeschoben werden kann.

Im sechsten Demontageschritt 625 wird beispielsweise das Mitnahmeelement 310 entfernt und ein zweites Werkzeug (in FIG 26 nicht dargestellt) auf den Antriebsabschnitt 190 aufgesetzt. Auch kann das Mitnahmeelement 310 an der Spindelmutter 305 und/oder das erste Werkzeug 510 an dem Mitnahmeelement 310 verbleiben, wenn beispielsweise genügend Platz an der Bedienerseite 123 vorhanden ist, um das zweite Werkzeug anzusetzen.

Mittels des zweiten Werkzeugs wird die erste Verbindung 106 zwischen der Zugstange 25 und dem Verbinder 30 aufgehoben. Beispielhaft wird ein Lösemoment M_{L} mittels des zweiten Werkzeugs über den Antriebsabschnitt 190 in die Zugstange 25 eingeleitet. Das Lösemoment M_{L} kann in die erste Drehrichtung gerichtet sein. Mit dem Lösemoment M_{L} wird der erste Gewindeabschnitt 125 aus dem vierten Gewinde 215 des Verbinders 30 herausgedreht. Ein notwendiges Lösegegenmoment zu dem Lösemoment M_{L} kann zum einen durch innere Reibung in der Gelenkwelle 50 und der zweiten Rotationskomponente 45 bereitgestellt werden. Zusätzlich kann das erste Halteelement 485 am Ende der zweiten Aufnahme 240 anlaufen, sodass das Lösegegenmoment zum Lösen der ersten Verbindung 106 durch die Halteeinrichtung 115 in den Verbinder 30 eingeleitet bzw. bereitgestellt wird. Mittels des zweiten Werkzeugs wird die Zugstange 25 aus dem Verbinder 30 herausgedreht.

In einem siebten Demontageschritt 630 wird beispielsweise das zweite Werkzeug entfernt und das Mitnahmeelement 310 wieder auf die Spindelmutter 305 aufgesteckt und entgegen der im vierten Demontageschritt 615 beschriebenen ersten Drehrichtung mit einer zweiten Drehrichtung verdreht. Durch die Verdrehung der Spindelmutter 305 in die zweite Drehrichtung bewegt sich der Lagersteg 330 der Spindelmutter 305 in Richtung der ersten Längsseite 95 in dem Axialspalt 470 und führt dabei den Hub h aus, bis das erste Axiallager 335 an der ersten Hülsenstirnseite 455 der Hülse 295 anliegt (vgl. FIG 28). Die Verdrehung der Spindelmutter 305 durch das Mitnahmeelement 310 in die zweite Drehrichtung bewirkt an der Zugstange 25 eine zweite Axialkraft F_{A2}, die in entgegengesetzter Richtung zu der ersten Axialkraft F_{A1} gerichtet ist. Mit der zweiten Axialkraft F_{A1} wird die Zugstange 25 aus der zweiten Position in Richtung der ersten Position bewegt. Dabei wird rückseitig die zweite Axialkraft F_{A2} über eine korrespondierend zu der zweiten Axialkraft F_{A2} und entgegen der zweiten Axialkraft F_{A2} wirkende zweite Axialgegenkraft F_{AG2} über das erste Axiallager 335 an der ersten Hülsenstirnseite 455, die als erste Axiallagerfläche wirkt abgestützt.

Von besonderem Vorteil ist hierbei, wenn die Zugstange 25 über die erste Position hinaus axial in die Welle 260 weiter in eine dritte Position eingezogen wird, als die Zugstange 25 in der ersten Position angeordnet ist. Dies entspricht dem in FIG 3 gezeigten dritten Betriebszustand. Dadurch wird verhindert, dass der erste Gewindeabschnitt 125 über die zweite Kupplungsseite 90 herausragt. Dadurch ist der erste Gewindeabschnitt 125 beim Transport der ersten Rotationskomponente 20 beispielsweise zu einer Revisionierung nach Ausbau aus der Produktionsanlage 10 geschützt. Nach Erreichen der dritten Position kann das Mitnahmeelement 310 von der Spindelmutter 305 mit der zweiten Ausrichtung abgezogen werden und um 180° um die zweite Rotationsachse 515 gedreht werden und mit der ersten Ausrichtung auf die Spindelmutter 305 aufgesteckt. Dadurch wird eine Verdrehsicherung der Spindelmutter 305 durch den Formschluss zwischen Eingriffselement 395 und Eingriffselementaufnahme 450 sichergestellt. Wird auf das Eingriffselement 395 verzichtet, kann auf das erneute Drehen des Mitnahmeelements 310 verzichtet werden, sodass über das Demontageverfahren hinweg das Mitnahmeelement 310 in der ersten Ausrichtung an der Spindelmutter 305 verbleibt.

Ferner wird im achten Demontageschritt noch das zweite Befestigungsmittel 311 auf dem Befestigungsabschnitt 179 angeordnet bzw. die Schraubenmutter auf den zweiten Gewindeabschnitt 180 aufgeschraubt.

Nach dem siebten Demontageschritt 630 kann die erste Rotationskomponente 20 zusammen mit der Zugstange 25 der zweiten Kupplungsseite 90 und der Ausrückeinrichtung 40 vollständig aus der Produktionsanlage 10 entnommen werden und revisioniert werden. Stattdessen kann eine revisionierte oder neue erste Rotationskomponente 20 zusammen mit einer weiteren Zugstange 25, einer weiteren zweiten Kupplungsseite 90 und einer weiteren Ausrückeinrichtung 40 in die Produktionsanlage 10 eingebaut werden.

Im Folgenden wird kurz auf das Montageverfahren eingegangen, das im Wesentlichen dem Demontageverfahren entspricht, jedoch in umgekehrter Reihenfolge abläuft. Es wird darauf hingewiesen, dass die im Folgenden beschriebenen Montageschritte beispielhaft sind und vorzugsweise in der angegebenen Reihenfolge durchgeführt werden. Selbstverständlich ist eine andere Reihenfolge möglich und/oder kann auf einzelne Montageschritte verzichtet werden.

Während des ausgebauten Zustands der ersten Rotationskomponente 20 wird der Verbinder 30 weiterhin zusammen mit der Gelenkwelle 50 durch die Halteeinrichtung 115 auf einer der Bedienerseite abgewandten Seite getragen. Dadurch sind keine weiteren Arbeiten auf der zur Bedienerseite abgewandten Seite notwendig.

Nach Austausch der in den FIGN 1 bis 28 gezeigten ursprünglichen ersten Rotationskomponente 20 wird eine revisionierte erste Rotationskomponente 20 zusammen mit der weiteren Zugstange 25, der weiteren zweiten Kupplungsseite 90 und der weiteren Ausrückeinrichtung 40 in Position in der Produktionsanlage 10 gebracht und dort im ersten Montageschritt montiert. Die erste Rotationskomponente 20, die weitere Zugstange 25, die weitere zweite Kupplungsseite 90 und die weitere Ausrückeinrichtung 40 sind identisch wie in den FIGN 1 bis 17 zu der ersten Rotationskomponente 20, der Zugstange 25, der Ausrückeinrichtung 40 beschrieben ausgebildet. Ferner wird im ersten Montageschritt das zweite Befestigungsmittel 311 von dem Befestigungsabschnitt 179 entfernt.

In einem zweiten Montageschritt (analog dem siebten Demontageschritt 630) wird beispielsweise das Mitnahmeelement 310 in Axialrichtung abgezogen und von der ersten Ausrichtung in die zweite Ausrichtung um 180° um die zweite Rotationsachse 515 gedreht. In der zweiten Ausrichtung wird das Mitnahmeelement 310 auf die Spindelmutter 305 aufgesteckt und das erste Werkzeug 510 auf das Mitnahmeelement 310 aufgesetzt. Dabei liegt beispielsweise die zweite Wendestirnseite 370 am Aufnahmegrund 425 an. Mittels des ersten Werkzeugs 510 wird das Mitnahmeelement 310 in die erste Drehrichtung gedreht, sodass die Spindelmutter 305 verdreht wird. Dabei führt die Spindelmutter 305 den Hub h aus bis das zweite Axiallager 340 an der zweiten Flanschstirnseite 435 anliegt.

Sind das Mitnahmeelement 310 und das erste Werkzeug 510 dauerhaft miteinander verbunden, kann auf das Drehen und erneute Aufstecken des Mitnahmeelements 310 verzichtet werden. Insbesondere verbleibt das Mitnahmeelement 310 in der ersten Ausrichtung an der Spindelmutter 305.

Das Mitnahmeelement 310 wird in der ersten Drehrichtung verdreht. Durch das Anliegen des zweiten Axiallagers 340 an der zweiten Flanschstirnseite 435 bewirkt die Verdrehung in der ersten Drehrichtung der Spindelmutter 305 keinen weiteren Hub h der Spindelmutter 305 in Richtung der zweiten Längsseite 100, sondern eine Verschiebung der Zugstange 25 aus der dritten Position heraus in Richtung der ersten Position. Nach Überfahren der ersten Position wird weiterhin das Mitnahmeelement 310 in die erste Drehrichtung verdreht, sodass axial entlang der Drehachse 15 in Richtung der zweiten Position verschoben wird. Das Mitnahmeelement 310 wird in die erste Drehrichtung gedreht, bis die erste Zugstangenlängsseite 105 die zweite Anschlussseite 75 des Verbinders 30 erreicht. Dabei kann insbesondere das erste Gewinde 130 an dem vierten Gewinde 215 so anstehen, dass das erste Gewinde 130 in das vierte Gewinde 215 einschraubbar ist.

In einem dritten Montageschritt (analog dem sechsten Demontageschritt 625) wird beispielsweise das erste Werkzeug 510 von dem Mitnahmeelement 310 entfernt und das zweite Werkzeug auf den Antriebsabschnitt 190 der Zugstange 25 aufgesetzt. Auch kann das erste Werkzeug 510 am Mitnahmeelement 310 verbleiben. Mittels des zweiten Werkzeugs wird die Zugstange 25 mit dem ersten Gewinde 130 in das vierte Gewinde 215 so weit eingeschraubt, bis die erste Absatzfläche 155 an der zweiten Stirnseite 220 des Verbinders 30 anliegt. Vorzugsweise wird die Zugstange 25 in den Verbinder 30 mit einem vordefinierten Anzugsdrehmoment eingeschraubt. Ein zum Anziehen des ersten Gewindes 130 benötigtes weiteres Gegenmoment zu dem Anzugsdrehmoment kann durch die Halteeinrichtung 115 an dem Verbinder 30 bereitgestellt werden. Dadurch ist der Verbinder 30 sowohl axial als auch radial fest mit der Zugstange 25 verbunden.

In einem vierten Montageschritt (analog dem vierten Demontageschritt 615) kann das zweite Werkzeug von der Zugstange 25 entfernt werden. Auch kann - sofern notwendig - das erste Werkzeug 510 wieder auf das Mitnahmeelement 310 aufgesetzt werden. Das zweite Werkzeug kann auch zum Gegenhalten an der Zugstange 25 verbleiben oder auch nach Aufsetzten des ersten Werkzeugs 510 ebenfalls neu aufgesetzt werden. Nun wird entgegen der ersten Drehrichtung in der zweiten Drehrichtung das Mitnahmeelement 310 mittels des ersten Werkzeugs 510 verdreht und die Spindelmutter 305 in der zweiten Drehrichtung rotiert.

Durch die Verdrehung der Spindelmutter 305 bewegt sich der Lagersteg 330 in Richtung der ersten Hülsenstirnseite 455. Bei Anliegen des ersten Axiallagers 335 an der ersten Hülsenstirnseite 455 ist der Hub h der Spindelmutter 305 in der Welle 260 beendet. Durch Einleiten des Montagedrehmoments M_{D} als Verdrehmoment das in entgegengesetzter Richtung zum Demontagedrehmoment M_{D} wirkt, bewirkt die Verdrehung der Spindelmutter 305 durch die Verdrehung des Mitnahmeelements 310 eine Umwandlung des Montagedrehmoment M_{D} in die zweite Axialkraft F_{A2}, die die Zugstange 25 aus der zweiten Position in Richtung der ersten Position zieht. Dabei nimmt die Zugstange 25 den Verbinder 30 in der Bewegung mit und der Verbinder 30 wird von der Halteeinrichtung 115 abgezogen. Dabei wird der Eingriff der Halteelemente 485, 505 in die jeweils zugeordnete Aufnahme 240, 245 des Verbinders 30 aufgehoben.

In der Bewegung der Zugstange 25 aus der zweiten Position in Richtung der ersten Position hält die Zugstange 25 durch die Abstützung an der ersten Buchse 265 den Verbinder 30 sowie die Gelenkwelle 50 und verhindert dadurch ein Herunterklappen der Gelenkwelle 50.

Kurz vor Erreichen der ersten Position greift die erste Kupplungsseite 80 in die zweite Kupplungsseite 90 ein. Sollte die erste Kupplungsseite 80 gegenüber der zweiten Kupplungsseite 90 nicht passend ausgerichtet sein, ist gegebenenfalls eine Verdrehung der ersten Rotationskomponente 20 um die Drehachse 15 notwendig, sodass der Eingriff der ersten Kupplungsseite 80 in die zweite Kupplungsseite 90 möglich ist.

Das Mitnahmeelement 310 wird so lange um die Drehachse 15 in die zweite Drehrichtung verdreht, bis die Zugstange 25 in die erste Position bewegt ist und sowohl die Kupplungsseiten 80, 90 ineinandergreifen als auch die Zentrierabsätze aufeinander liegen.

In einem sechsten Montageschritt (analog dem zweiten Demontageschritt 605) wird beispielsweise das Mitnahmeelement 310 abgezogen und von der zweiten Ausrichtung in die erste Ausrichtung gedreht. Mit der ersten Ausrichtung wird das Mitnahmeelement 310 in den Anschlussflansch 315 eingesteckt, sodass die Eingriffselemente 395 in die jeweils zugeordneten Eingriffselementaufnahmen 450 eingreifen. Dadurch wird eine Verdrehsicherung der Spindelmutter 305 relativ zum Anschlussflansch 315 sichergestellt. Auf den sechsten Montageschritt kann auch verzichtet werden.

In einem auf den sechsten Montageschritt folgenden siebten Verfahrensschritt wird an dem Befestigungsabschnitt 179 eine Spanneinrichtung 520 (in FIG 4 dargestellt) angesetzt, die sich beispielsweise an dem Anschlussflansch 315 oder an dem Mitnahmeelement 310 axial abstützen kann. Die Spanneinrichtung 520 kann beispielsweise eine hydraulische Spanneinrichtung 520 sein. Mittels der Spanneinrichtung 520 wird die Zugstange 25 gespannt und die Spannkraft F_{S} in die Zugstange 25 eingeleitet. Dabei zieht die Spanneinrichtung 520 den Befestigungsabschnitt 179 in axialer Richtung von der zweiten Längsseite 100 in eine der ersten Längsseite abgewandte axiale Richtung von der zweiten Längsseite 100 weg.

Dabei wird der Dehnabschnitt 145 der Zugstange 25 elastisch gelenkt. Unter Aufrechterhaltung der Spannkraft F_{S} wird auf dem Befestigungsabschnitt 179 das Befestigungsmittel 311 aufgebracht. Beispielsweise wird unter Aufrechterhaltung der Spannkraft F_{S} die Schraubenmutter auf den zweiten Gewindeabschnitt 180 aufgeschraubt, bis das Befestigungsmittel an der dritten Absatzfläche 405 des Mitnahmeelements 310 anliegt.

In einem auf den siebten Montageschritt folgenden achten Montageschritt wird die Spanneinrichtung 520 abgenommen.

Die oben beschriebene Ausgestaltung der Produktionsanlage 10 hat den Vorteil, dass die erste Rotationskomponente 20 besonders schnell gewechselt werden kann und zusätzlich auch bei beengten Bauraumverhältnissen im Bereich der Gelenkwelle 50 der Wechsel der ersten Rotationskomponente 20 besonders einfach durchgeführt werden kann. Insbesondere kann hierbei durch die Zugstange 25 und die Ausrückeinrichtung 40 der Wechsel der ersten Rotationskomponente 20 auf der zur Gelenkwelle 50 gegenüberliegenden Bedienerseite der Produktionsanlage durchgeführt werden, ohne dass hierbei zusätzlich die Gelenkwelle 50 durch beispielsweise einen Kran abgestützt werden muss.

Ferner kann durch die unterschiedliche Steigung des zweiten Gewindes 175 gegenüber dem ersten Gewinde 130, insbesondere wenn die zweite Gewindesteigung deutlich größer als die erste Gewindesteigung ist, die Zugstange 25 besonders schnell in axialer Richtung bewegt werden, sodass der Verbinder 30 besonders schnell in axialer Richtung verschoben werden kann. Insbesondere kann dadurch auch schnell die Kupplung 35 von einem geschlossenen in einen offenen Zustand und umgekehrt überführt werden.

Durch die Ausgestaltung des Mitnahmeelements 310 kann zusätzlich auf komplizierte weitere Werkzeuge zum Bewegen der Spindelmutter 305 verzichtet werden. Durch das Demontage- und Montageverfahren kann die Rotationskomponente 20, 45 besonders schnell gewechselt und getauscht werden.

Ferner wird eine Verdrehsicherung der Zugstange 25 gegenüber der Rotationskomponente bereitgestellt, wodurch ein ungewolltes Verdrehen der Zugstange 25 und somit eine ungewollte Bewegung der Zugstange 25 beispielsweise im Transport aus der dritten Position in Richtung der ersten oder zweiten Position vermieden wird.

### Bezugszeichenliste

- 10: Produktionsanlage
- 15: Drehachse
- 20: erste Rotationskomponente
- 25: Zugstange
- 30: Verbinder
- 35: Kupplung
- 40: Ausrückeinrichtung
- 45: zweite Rotationskomponente
- 49: Drehmomentübertragungseinrichtung
- 50: Gelenkwelle
- 55: erster Gelenkwellenkopf
- 60: zweiter Gelenkwellenkopf
- 65: Verbindungswelle
- 70: erste Anschlussseite
- 75: zweite Anschlussseite
- 80: erste Kupplungsseite
- 85: dritte Anschlussseite
- 90: zweite Kupplungsseite
- 95: erste Längsseite
- 100: zweite Längsseite
- 105: erste Zugstangenlängsseite
- 106: erste Verbindung
- 110: zweite Zugstangenlängsseite
- 115: Halteeinrichtung
- 120: Träger
- 121: Hohlbereich
- 122: Schutzschicht
- 123: Bedienerseite
- 124: Antriebsseite
- 125: erster Gewindeabschnitt
- 130: erstes Gewinde
- 135: erster Lagerabschnitt
- 140: erste Lagerfläche
- 145: Dehnabschnitt
- 150: erster Absatz
- 155: erste Absatzfläche
- 160: zweiter Lagerabschnitt
- 165: zweite Lagerfläche
- 170: erster Spindelabschnitt
- 175: zweites Gewinde
- 179: Befestigungsabschnitt
- 180: zweiter Gewindeabschnitt
- 185: drittes Gewinde
- 190: Antriebsabschnitt
- 195: Kopfprofil
- 200: erster Befestigungsflansch
- 205: zweiter Befestigungsflansch
- 210: Sackloch
- 215: viertes Gewinde (erstes Innengewinde)
- 220: zweite Stirnseite
- 225: erste Klaue
- 230: erster Zentriersteg
- 235: erste äußere Umfangsseite (des Verbinders)
- 240: zweite Aufnahme
- 245: erste Aufnahme
- 250: erste Stirnseite
- 255: zweite Klaue
- 260: Welle
- 265: erste Buchse
- 270: erste Buchsenlagerfläche
- 275: zweite äußere Umfangsseite
- 280: erste Lageranordnung
- 281: zweite Lageranordnung
- 284: zweiter Zentriersteg
- 285: zweite Buchse
- 290: zweite Buchsenlagerfläche
- 295: Hülse
- 300: Radialspalt
- 305: Spindelmutter
- 310: Mitnahmeelement
- 311: Befestigungsmittel
- 315: Anschlussflansch
- 320: zweiter Spindelabschnitt
- 325: zweites Innengewinde
- 330: Lagersteg
- 335: erstes Axiallager
- 340: zweites Axiallager
- 345: profilierter Bereich
- 349: erste Anlagefläche
- 350: Wendeabschnitt
- 360: erste Durchführung
- 365: erste Wendestirnseite
- 370: zweite Wendestirnseite
- 375: erster Eingriffsabschnitt
- 380: zweite Anlagefläche
- 385: zweiter Eingriffsabschnitt
- 390: zweiter Absatz
- 395: Eingriffselement
- 400: dritte äußere Umfangsseite (des Wendelements)
- 401: zweite Absatzfläche
- 405: dritte Absatzfläche
- 410: dritte Anlagefläche
- 415: (ringförmiger) Flanschabschnitt
- 420: erste Flanschstirnseite
- 421: Mitnahmeelementaufnahme
- 425: Aufnahmegrund
- 430: Befestigungsöffnung
- 435: zweite Flanschstirnseite
- 440: Hülsenabschnitt
- 445: zweite Durchführung
- 450: Eingriffselementaufnahme
- 455: erste Hülsenstirnseite
- 460: zweite Hülsenstirnseite
- 465: Wellenabsatz
- 470: Axialspalt
- 480: Verbindungsabschnitt
- 485: erstes Halteelement
- 490: erste Trägerstirnseite
- 495: zweite Trägerstirnseite
- 500: Halter
- 505: zweites Halteelement
- 510: erstes Werkzeug
- 515: zweite Rotationsachse
- 520: Spanneinrichtung
- 600: erster Demontageschritt
- 605: zweiter Demontageschritt
- 610: dritter Demontageschritt
- 615: vierter Demontageschritt
- 620: fünfter Demontageschritt
- 625: sechster Demontageschritt
- 630: siebter Demontageschritt

- F_{S}: Spannkraft
- M: Antriebsdrehmoment
- M_{D}: Demontagedrehmoment
- M_{M}: Montagedrehmoment

- F_{A1}: erste Axialkraft
- F_{AG1}: erste Axialgegenkraft
- F_{A2}: zweite Axialkraft
- F_{AG2}: zweite Axialgegenkraft

## Patentansprüche

1. Produktionsanlage (10), vorzugsweise zur Herstellung von Walzgut, insbesondere eine Walzstraße, ein Rollengang und/oder eine Stranggießanlage,
- wobei die Produktionsanlage (10) eine drehbar um eine Drehachse (15) gelagerte Rotationskomponente (20), eine Zugstange (25), einen Verbinder (30) und eine Halteeinrichtung (115) aufweist,
- wobei sich die Zugstange (25) zwischen einer ersten Längsseite (95) und einer zweiten Längsseite (100) der Rotationskomponente (20) entlang der Drehachse (15) durch die Rotationskomponente (20) erstreckt,
- wobei der Verbinder (30) auf einer der ersten Längsseite (95) axial abgewandten Seite eine erste Anschlussseite (70), die mit einer Drehmomentübertragungseinrichtung (49) verbindbar ist, und auf einer axial der ersten Längsseite (95) zugewandten Seite eine zweite Anschlussseite (75) aufweist, ,
- wobei die Zugstange (25) in axialer Richtung bezogen auf die Drehachse (15) zwischen einer ersten Position und einer axial versetzt zu der ersten Position angeordneten zweiten Position bewegbar ist,
- wobei die Zugstange (25) an einer ersten Zugstangenlängsseite (105) mit der zweiten Anschlussseite (75) des Verbinders (30) mittels einer ersten Verbindung (106) in der ersten Position verbunden ist,
- wobei in der ersten Position der Verbinder (30) drehfest mit der Rotationskomponente (20) gekoppelt ist,
- wobei in der zweiten Position der Verbinder (30) an der Halteeinrichtung (115) angeordnet ist und die Halteeinrichtung (115) ausgebildet ist, den Verbinder (30) zu tragen,
- wobei in der zweiten Position der Zugstange (25) die erste Verbindung (106) reversibel lösbar ist und eine Drehmomentübertragung zwischen Rotationskomponente (20) und dem Verbinder (30) unterbrochen ist,
- wobei die Zugstange (25) ausgebildet ist, in einer Bewegung zwischen der ersten Position und der zweiten Position den Verbinder (30) zu mitzunehmen.

2. Produktionsanlage (10) nach Anspruch 1,
- aufweisend eine Ausrückeinrichtung (40),
- wobei die Ausrückeinrichtung (40) an der zweiten Längsseite (100) der Rotationskomponente (20) angeordnet und mit der Rotationskomponente (20) verbunden ist,
- wobei die Ausrückeinrichtung (40) ausgebildet ist, die Zugstange (25) zwischen der ersten Position und der zweiten Position zu verschieben,
- wobei vorzugsweise die Ausrückeinrichtung (40) ausgebildet ist, in der ersten Position der Zugstange (25) eine in axialer Richtung bezogen auf die Drehachse (15) wirkende Spannkraft (F_{S}) an der Rotationskomponente (20) abzustützen.

3. Produktionsanlage (10) nach Anspruch 2,
- wobei die Ausrückeinrichtung (40) eine Spindelmutter (305) aufweist,
- wobei die Spindelmutter (305) drehbar um die Drehachse (15) und relativ gegenüber der Rotationskomponente (20) verdrehbar ist,
- wobei die Zugstange (25) einen ersten Spindelabschnitt (170) mit einem Außengewinde aufweist,
- wobei die Spindelmutter (305) einen hohlkörperartigen zweiten Spindelabschnitt (320) mit einem komplementär zu dem Außengewinde ausgebildeten Innengewinde (325) aufweist,
- wobei das Innengewinde (325) und das Außengewinde kämmend ineinander eingreifen,
- wobei die Spindelmutter (305) ausgebildet ist, bei Rotation um die Drehachse (15) die Zugstange (25) zwischen der ersten Position und der zweiten Position in axialer Richtung zu bewegen.

4. Produktionsanlage (10) nach Anspruch 3,
- wobei die Spindelmutter (305) einen radial außen an dem zweiten Spindelabschnitt (320) angeordneten und sich in radialer Richtung nach außen bezogen auf die Drehachse (15) erstreckenden Lagersteg (330) aufweist,
- wobei auf einer dem Verbinder (30) zugewandten Axialseite des Lagerstegs (330) an dem Lagersteg (330) die Spindelmutter (305) ein erstes Axiallager (335) und auf einer dem Verbinder (30) abgewandten Axialseite des Lagerstegs (330) ein zweites Axiallager (340) aufweist,
- wobei zwischen einer ersten Axiallagerfläche (455) der Rotationskomponente (20) und einer zweiten Axiallagerfläche (435) ein Axialspalt (470) angeordnet ist,
- wobei der Lagersteg (330) und die Axiallager (335, 340) in dem Axialspalt (470) angeordnet sind,
- wobei das zweite Axiallager (340) ausgebildet ist, bei Rotation der Spindelmutter (305) in eine zur ersten Drehrichtung entgegengesetzten zweiten Drehrichtung um die Drehachse (15) eine in axialer Richtung wirkende erste Axialgegenkraft (F_{AG1}) an der zweiten Axiallagerfläche (435) aus dem Lagersteg (330) abzustützen,
- wobei das erste Axiallager (335) ausgebildet ist, bei Rotation der Spindelmutter (305) um die Drehachse (15) mit einer ersten Drehrichtung an der ersten Axiallagerfläche (455) anzuliegen und eine zweite Axialgegenkraft (F_{AG2}) aus dem Lagersteg (330) abzustützen.

5. Produktionsanlage (10) nach Anspruch 4,
- wobei an der ersten Zugstangenlängsseite (105) die Zugstange (25) einen ersten Gewindeabschnitt (125) mit einem ersten Gewinde (130) aufweist,
- wobei in der ersten Position das erste Gewinde (130) in die zweite Anschlussseite (75) eingeschraubt ist,
- wobei das erste Gewinde (130) in axialer Richtung bezogen auf die Drehachse (15) eine maximale Gewindelänge aufweist,
- wobei die maximale Gewindelänge des ersten Gewindes (130) geringer ist als ein maximaler Hub des Lagerstegs (330) zwischen der ersten Axiallagerfläche (455) und der zweiten Axiallagerfläche (435).

6. Produktionsanlage (10) nach einem der Ansprüche 3 bis 5,
- wobei die Ausrückeinrichtung (40) ein Mitnahmeelement (310) und einen Anschlussflansch (315) aufweist,
- wobei der Anschlussflansch (315) an der zweiten Längsseite (100) der Rotationskomponente (20) drehfest befestigt ist und eine Mitnahmeelementaufnahme (421) aufweist, die auf einer dem Verbinder (30) abgewandten Axialseite offen ist,
- wobei das Mitnahmeelement (310) in einer ersten Ausrichtung und einer zur ersten Ausrichtung unterschiedlichen zweiten Ausrichtung in der Mitnahmeelementaufnahme (421) anordenbar ist,
- wobei in der zweiten Ausrichtung das Mitnahmeelement (310) um 180° um eine Rotationsachse (515) geneigt zu der Drehachse (15) verdreht in der Mitnahmeelementaufnahme (421) angeordnet ist,
- wobei in der ersten Ausrichtung das Mitnahmeelement formschlüssig mit dem Anschlussflansch (315) verbunden ist,
- wobei in der zweiten Ausrichtung das Mitnahmeelement (310) gegenüber dem Anschlussflansch (315) drehbar um die Drehachse (15) verdrehbar ist,
- wobei sowohl in der ersten Ausrichtung als auch in der zweiten Ausrichtung das Mitnahmeelement (310) formschlüssig drehfest mit der Spindelmutter (305) verbunden ist.

7. Produktionsanlage (10) nach Anspruch 6,
- wobei das Mitnahmeelement (310) einen ersten Eingriffsabschnitt (375), einen axial gegenüberliegend zu dem ersten Eingriffsabschnitt (375) angeordneten zweiten Eingriffsabschnitt (385) und einen axial zwischen dem ersten Eingriffsabschnitt (375) und dem zweiten Eingriffsabschnitt (385) angeordneten zweiten Absatz (390) aufweist,
- wobei in der ersten Ausrichtung der erste Eingriffsabschnitt (375) auf den zweiten Spindelabschnitt (320) aufgesteckt ist und der zweite Spindelabschnitt (320) formschlüssig mit dem Mitnahmeelement (310) verbunden ist,
- wobei die Zugstange (25) das Mitnahmeelement (310) axial durchgreift und auf einer zum Verbinder (30) abgewandten Seite über den zweiten Absatz (390) des Mitnahmeelements (310) mit wenigstens einem Befestigungsabschnitt (179) in den zweiten Eingriffsabschnitt (385) ragt,
- wobei ein Befestigungsmittel (311) in dem zweiten Eingriffsabschnitt (385) am Befestigungsabschnitt (179) befestigt ist,
- wobei das Befestigungsmittel (311) ausgebildet ist, die Spannkraft (F_{S}) der Zugstange (25) an dem Mitnahmeelement (310) abzustützen,
- wobei in der zweiten Ausrichtung der zweite Eingriffsabschnitt (385) auf den zweiten Spindelabschnitt (320) aufgesteckt ist und der zweite Spindelabschnitt (320) formschlüssig mit dem Mitnahmeelement (310) verbunden ist und ein Antriebsdrehmoment (M) zum Verdrehen der Spindelmutter (305) in der zweiten Ausrichtung in das Mitnahmeelement (310) einleitbar ist.

8. Produktionsanlage (10) nach einem der vorhergehenden Ansprüche,
- wobei die Zugstange (25) auf einer in axialer Richtung bezogen auf die Drehachse (15) gegenüberliegend zur ersten Zugstangenlängsseite (105) angeordneten zweiten Zugstangenlängsseite (110) einen Antriebsabschnitt (190) aufweist,
- wobei der Antriebsabschnitt (190) beispielsweise ein Außenvierkantprofil aufweist,
- wobei auf dem Antriebsabschnitt (190) ein Werkzeug zur Einleitung eines Anzugsdrehmoments oder eines Lösemoments zum Lösen der ersten Verbindung (106) einleitbar ist.

9. Produktionsanlage (10) nach einem der vorhergehenden Ansprüche,
- wobei die Rotationskomponente (20) eine erste Buchse (265) mit einer an einer inneren Umfangsseite angeordneten ersten Buchsenlagerfläche (270) aufweist,
- wobei die Zugstange (25) auf einer der ersten Längsseite (95) zugewandten Seite einen ersten Lagerabschnitt (135) mit einer umfangsseitig angeordneten ersten Lagerfläche (140) aufweist,
- wobei sowohl in der ersten Position als auch in der zweiten Position der erste Lagerabschnitt (135) die erste Buchse (265) axial durchgreift und die erste Lagerfläche (140) und die erste Buchsenlagerfläche (270) aneinander liegen,
- wobei die erste Buchse (265) ausgebildet ist, den ersten Lagerabschnitt (135) in radialer Richtung zu lagern und Kräfte aus dem Verbinder (30) und der Zugstange (25) radial an der Rotationskomponente (20) abzustützen.

10. Produktionsanlage (10) nach Anspruch 9,
- wobei die Zugstange (25) einen Dehnabschnitt (145) aufweist,
- wobei der Dehnabschnitt (145) axial auf einer der ersten Zugstangenlängsseite (105) abgewandten Seite des ersten Lagerabschnitts (135) angeordnet ist,
- wobei der Dehnabschnitt (145) in radialer Richtung schlanker als der erste Lagerabschnitt (135) ausgebildet ist.

11. Produktionsanlage (10) nach einem der vorhergehenden Ansprüche,
- aufweisend eine Kupplung (35) mit einer ersten Kupplungsseite (80) und einer zweiten Kupplungsseite (90),
- wobei die erste Kupplungsseite (80) an dem Verbinder (30) angeordnet ist,
- wobei die zweite Kupplungsseite (90) an der ersten Längsseite (95) mit der Rotationskomponente (20) drehfest verbunden ist,
- wobei in der ersten Position der Zugstange (25) die Kupplung (35) geschlossen ist und die Kupplung (35) drehmomentschlüssig, vorzugsweise drehfest, den Verbinder (30) mit der ersten Längsseite (95) der Rotationskomponente (20) verbindet,
- wobei in der zweiten Position der Zugstange (25) die Kupplung (35) geöffnet ist und die Drehmomentübertragung zwischen Verbinder (30) und der ersten Längsseite (95) über die Kupplung (35) unterbrochen ist.

12. Produktionsanlage (10) nach einem der vorhergehenden Ansprüche,
- wobei die Rotationskomponente (20) ein Rotor einer elektrischen Maschine oder eine Rolle des Rollengangs oder eine Rolle der Walzstraße oder Stranggießanlage, insbesondere eine Treiberrolle, ist
- und/oder
- wobei die Kupplung (35) eine Klauenkupplung ist,
- wobei in der ersten Position die erste Kupplungsseite (80) und die zweite Kupplungsseite (90) kämmend ineinander eingreifen,
- wobei in der zweiten Position der Zugstange (25) der Eingriff der ersten Kupplungsseite (80) und der zweiten Kupplungsseite (90) ineinander aufgehoben ist.

13. Verfahren zur Montage einer Produktionsanlage (10) nach einem der vorhergehenden Ansprüche,
- wobei die zweite Anschlussseite (75) und die erste Zugstangenlängsseite (105) fluchtend ausgerichtet werden,
- wobei der Verbinder (30) an der Halteeinrichtung (115) angeordnet ist und von der Halteeinrichtung (115) getragen wird,
- wobei die Zugstange (25) aus der ersten Position in die zweite Position bewegt wird,
- wobei in der zweiten Position die erste Verbindung (106) hergestellt wird,
- wobei die Zugstange (25) von der zweiten Position in die erste Position verfahren wird und die Zugstange (25) den Verbinder (30) in der Bewegung der Zugstange (25) von der zweiten Position in die erste Position radial bezogen auf die Drehachse (15) abstützt und den Verbinder (30) von der Halteeinrichtung (115) trennt.

14. Verfahren zur Demontage einer Produktionsanlage (10) nach einem der Ansprüche 1 bis 12,
- wobei die Zugstange (25) von der ersten Position in die zweite Position verfahren wird und die Zugstange (25) den Verbinder (30) in der Bewegung der Zugstange (25) von der ersten Position in die zweite Position radial bezogen auf die Drehachse (15) abstützt,
- wobei in der Bewegung der Zugstange (25) von der ersten Position in die zweite Position eine Drehmomentübertragung zwischen Verbinder (30) und erster Längsseite (95) der Rotationskomponente (20) getrennt wird und der Verbinder (30) an die Halteeinrichtung (115) bewegt wird,
- wobei die Halteeinrichtung (115) den Verbinder (30) trägt und in der zweiten Position die erste Verbindung (106) zwischen Verbinder (30) und Zugstange (25) gelöst wird.

15. Verfahren nach Anspruch 14,
- wobei in der Bewegung der ersten Zugstange (25) von der ersten Position in die zweite Position die Kupplung (35) von einem geschlossenen Zustand in einen offenen Zustand überführt und die Drehmomentübertagung zwischen Verbinder (30) und Rotationskomponente aufgehoben wird.
